(19) Europäisches Patentamt
European Patent Office
Office européen des brevets

(11) EP 1 757 658 A1

(12) EUROPEAN PATENT APPLICATION
published in accordance with Art. 158(3) EPC

(43) Date of publication:
**28.02.2007 Bulletin 2007/09**

(21) Application number: **05736963.9**

(22) Date of filing: **28.04.2005**

(51) Int Cl.:
***C08L 23/08*** *(2006.01)* ***B60C 1/00*** *(2006.01)*
***C08L 9/00*** *(2006.01)*

(86) International application number:
**PCT/JP2005/008244**

(87) International publication number:
**WO 2005/105913 (10.11.2005 Gazette 2005/45)**

(84) Designated Contracting States:
**AT BE BG CH CY CZ DE DK EE ES FI FR GB GR HU IE IS IT LI LT LU MC NL PL PT RO SE SI SK TR**

(30) Priority: **28.04.2004 JP 2004134710**

(71) Applicants:
- **Mitsui Chemicals, Inc.**
  **Tokyo 105-7117 (JP)**
- **THE YOKOHAMA RUBBER CO., LTD.**
  **Tokyo 105-8685 (JP)**

(72) Inventors:
- **ICHINO, Kotaro,**
  **MITSUI CHEMICALS, INC.**
  **Ichihara-shi, Chiba 2990108 (JP)**
- **KUNIZANE, Masao,**
  **MITSUI CHEMICALS, INC.**
  **Ichihara-shi, Chiba 2990108 (JP)**
- **ISHII, Yuji,**
  **MITSUI CHEMICALS, INC.**
  **Ichihara-shi, Chiba 2990108 (JP)**
- **HIRAOKA, Kunihide,2MITSUI CHEMICALS, INC.**
  **Ichihara-shi, Chiba 2990108 (JP)**
- **KAWASAKI, Masaaki,**
  **MITSUI CHEMICALS, INC.**
  **Ichihara-shi,**
  **Chiba 2990108 (JP)**
- **MURAKAMI, Hidetatsu,**
  **MITSUI CHEMICALS, INC.**
  **Ichihara-shi,**
  **Chiba 2990108 (JP)**
- **OKADA, Keiji,**
  **MITSUI CHEMICALS, INC.**
  **Sodegaura-shi,**
  **Chiba 2990265 (JP)**

(74) Representative: **Cresswell, Thomas Anthony**
**J.A. KEMP & CO.**
**14 South Square**
**Gray's Inn**
**London WC1R 5JJ (GB)**

# (54) RUBBER COMPOSITION AND USE THEREOF

(57) Provided is a rubber composition which can give a tire excellent in braking performance and fuel consumption and which is excellent in mechanical strength and fatigue resistance, and a use thereof.

The rubber composition of the present invention contains a

(A) 60 to 0.1 parts by weight of a nonconjugated polyene copolymer, which is a random copolymer containing 96 to 70 mol% of the structural units derived from α-olefin (A1) and 4 to 30 mol% of the structural units derived from a nonconjugated polyene (A2), and has a glass transition temperature (Tg) of -25 to 20°C,

(B) 40 to 99.9 parts by weight of a diene rubber and

(C) at least one selected from the group consisting of specific polymers.

EP 1 757 658 A1

## Description

### TECHNICAL FIELD

The present invention relates to a new and useful rubber composition containing a nonconjugated polyene copolymer and a diene rubber, and use of thereof.

### BACKGROUND ART

Heretofore, as a rubber composition for an automobile tire tread, there has generally been used a rubber composition of a styrene/butadiene copolymer rubber (SBR) and a natural rubber. Generally, an automobile tire is desired to have excellent fuel consumption performance and abrasion resistance in terms of lowering fuel consumption of automobiles associated with saving of energy and to have high braking performance in terms of stability. However, the conventional rubber compositions of the styrene/butadiene copolymer rubber and the natural rubber have a problem that a tire sufficiently satisfying these performances cannot be produced.
JP-A No. 2001-114837 (Patent Document 1) discloses a rubber composition which can give a tire excellent in braking performance and fuel consumption, but it cannot be said that this rubber composition has sufficient fatigue resistance, mechanical strength, or the like.
Therefore, a rubber composition, which can give a tire excellent in braking performance and fuel consumption and which is excellent in fatigue resistance and mechanical strength has been desired.
Further, JP-A No. 11-278009 (Patent Document 2) discloses a tire component which is excellent in tear strength by addition of a functionalized polyolefin modified with maleic anhydride, or the like. However, it has no description on the specific composition as a composition used in the tire components such as the composition of the present invention.

[Patent Document 1] JP-A No. 2001-114837
[Patent Document 2] JP-A No. 11-278009

### DISCLOSURE OF THE PRESENT INVENTION

### PROBLEMS TO BE SOLVED BY THIS INVENTION

The present invention aims to overcome the above problems associated with related arts, and thus it is an object of the present invention to provide a rubber composition which can give a tire excellent in braking performance and fuel consumption and which is excellent in mechanical strength and fatigue resistance, and a use thereof.

### MEANS FOR SOLVING THE PROBLEMS

The present inventors have studied extensively and intensively to solve the above problems, as a result, they have found that a rubber composition containing a nonconjugated polyene copolymer, a diene rubber and a specific component can give a tire excellent in braking performance and fuel consumption performance, and is excellent mechanical strength and fatigue resistance, and then have completed the present invention. These knowledge has been found for the first time by the inventors.
The rubber composition comprising a nonconjugated polyene copolymer (A), a diene rubber (B) and a specific component (C) according to the present invention (hereinafter, simply also referred to as "rubber composition") is characterized in that it comprises:

(A) 60 to 0.1 parts by weight of a nonconjugated polyene copolymer, which is a random copolymer containing 96 to 70 mol% of the structural units derived from α-olefin (A1) and 4 to 30 mol% of the structural units derived from a nonconjugated polyene (A2), and has a glass transition temperature (Tg) of -25 to 20°C,
(B) 40 to 99.9 parts by weight of a diene rubber and
(C) a below-described amount, based on 100 parts by weight of the total amount of the component (A) and the component (B), of at least one selected from the group consisting of the following components (C1) to (C9), with the proviso that if the component (C) comprises an acrylonitrile-conjugated diene copolymer (C4), the component (B) is not the acrylonitrile-conjugated diene copolymer:

(C1) 1 to 15 parts by weight of a copolymer of α-olefin having 2 or more carbon atoms and a vinyl compound having a polar group [hereinafter, also referred to as "component (C1)"],
(C2) 1 to 15 parts by weight of a copolymer containing a block segment of an aromatic vinyl polymer and a

block segment of a conjugated diene polymer, or a hydrogen adduct thereof [hereinafter, also referred to as "component (C2)"],

(C3) 1 to 15 parts by weight of an α-olefin polymer or an α-olefin copolymer, which is obtained by (co)polymerizing one or two or more kinds of α-olefins having the total number of 6 or more carbon atoms, with the proviso that in the case of the copolymer in which the α-olefins contain two or more kinds of α-olefins and contain an α-olefin having 5 or less carbon atoms, the structural units derived from at least one kind of α-olefin is preset in the range of 5 to 95 mol% [hereinafter, also referred to as "component (C3)"],

(C4) 1 to 15 parts by weight of an acrylonitrile-conjugated diene copolymer [hereinafter, also referred to as "component (C4)"],

(C5) 1 to 15 parts by weight of olefinic thermoplastic elastomer, which is obtained by dynamically heat-treating 5 to 60% by weight of polyethylene resin (C5-1) and 95 to 40% by weight of an ethylene/α-olefin copolymer (C5-2) with a Mooney viscosity [$ML_{1+4}$ (100°C), JIS K6300] of 90 to 250 and an ethylene content of 70 to 95 mol%, in the absence of a crosslinking agent [hereinafter, also referred to as "component (C5)"],

(C6) 1 to 15 parts by weight of an α-olefin/nonconjugated diene copolymer, which is obtained by copolymerizing one or two or more kinds of α-olefins and the nonconjugated diene represented by the following formula [I] or [II], contains 0.1 to 30 mol% of the nonconjugated polyene, based on 100 mol% of the total amount of the α-olefins and the nonconjugated polyene, and has a glass transition temperature (Tg) of lower than -25°C [hereinafter, also referred to as "component (C6)"].

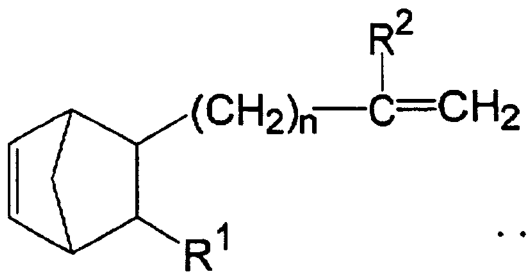

··· [I]

wherein n is an integer of 0 to 10,
$R^1$ is a hydrogen atom or an alkyl group having 1 to 10 carbon atoms, and
$R^2$ is a hydrogen atom or an alkyl group having 1 to 5 carbon atoms.

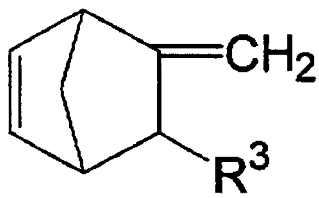

··· [II]

wherein $R^3$ is a hydrogen atom or an alkyl group having 1 to 10 carbon atoms.

(C7) 1 to 15 parts by weight of an α-olefin/nonconjugated diene copolymer, which is obtained by copolymerizing one or two or more kinds of α-olefins having 2 or more carbon atoms and the nonconjugated polyene represented by the following formula (2-1), contains 0.1 to 30 mol% of the nonconjugated polyene, based on 100 mol% of the total amount of the α-olefins and the nonconjugated polyene, and has a glass transition temperature (Tg) of lower than -25°C [hereinafter, also referred to as "component (C7)"],

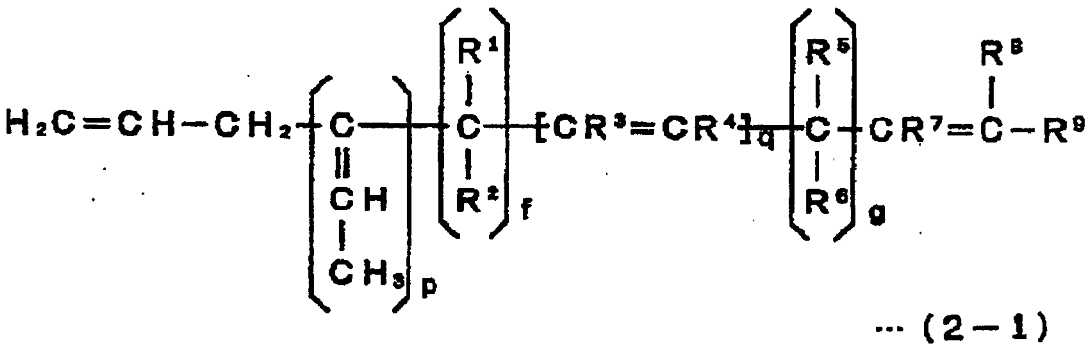

... (2-1) ;

wherein p and q are 0 or 1 with the proviso that p and q are not simultaneously 0;
f is an integer of 0 to 5 with the proviso that f is not 0 when both p and q are 1;
g is an integer of 1 to 6;
$R^1$, $R^2$, $R^3$, $R^4$, $R^5$, $R^6$ and $R^7$ are each independently a hydrogen atom or an alkyl group having 1 to 3 carbon atoms;
$R^8$ is an alkyl group having 1 to 3 carbon atoms; and
$R^9$ is a hydrogen atom, an alkyl group having 1 to 3 carbon atoms or a group represented by $-(CH_2)_n-CR^{10}=C(R^{11})R^{12}$ wherein n is an integer of 1 to 5, $R^{10}$ and $R^{11}$ are each independently a hydrogen atom or an alkyl group having 1 to 3 carbon atoms and $R^{12}$ is an alkyl group having 1 to 3 carbon atoms, with the proviso that $R^9$ is a hydrogen atom or an alkyl group having 1 to 3 carbon atoms when both p and q are 1.
(C8) 1 to 15 parts by weight of a modified polymer, which is obtained by graft-modifying any one of the above polymers (C1), (C2), (C3), (C6), (C7) by an unsaturated compound having a polar group [hereinafter, also referred to as "component (C8)"], and
(C9) 1 to 15 parts by weight of a nonionic surfactant, a cationic surfactant, an anionic surfactant or an amphoteric surfactant, or a mixture of two or more thereof, which has a hydrophilic group and an oleophilic group [hereinafter, also referred to as "component (C9)"].

The rubber composition preferably contains 1 to 30 parts by weigh of a petroleum resin (D), based on 100 parts by weight of the total amount of the nonconjugated polyene copolymer (A) and the diene rubber (B).
The structural units derived from the α-olefin (A1) preferably comprises structural units (a) derived from ethylene, and a molar ratio [(a)/(b)] of the structural units (a) derived from ethylene and the structural units (b) derived from the α-olefin having 3 or more carbon atoms is preferably 100/0 to 1/99.
The nonconjugated polyene copolymer (A) preferably has a Mooney viscosity [$ML_{1+4}$ (100°C), JIS K6300] of 5 to 200.
The nonconjugated polyene copolymer (A) preferably has an intrinsic viscosity [η], as measured in decalin at 135°C, of 0.01 to 10 dl/g.
At least a portion of the nonconjugated polyene (A2) is preferably nonconjugated cyclic polyene (A2a).
The nonconjugated cyclic polyene (A2a) is preferably a nonconjugated cyclic polyene represented by the following formula (1-1):

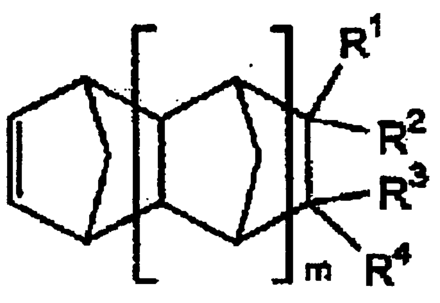

... (1-1)

wherein m is an integer of 0 to 2,
$R^1$ to $R^4$ are each independently an atom or group selected from the group consisting of a hydrogen atom, a halogen atom and a hydrocarbon group, and the hydrocarbon group may have a double bond;
$R^1$ to $R^4$ may be linked with one another to form a monocyclic or polycyclic ring which may have a double bond;
$R^1$ and $R^2$, or $R^3$ and $R^4$ may together form an alkylidene group; and
$R^1$ and $R^3$, or $R^2$ and $R^4$ may be linked to each other to form a double bond, with the proviso that $R^1$ to $R^4$ satisfy at least one of the following (i) to (iv) conditions:

(i) $R^1$ to $R^4$ are linked with one another to form a monocyclic or polycyclic ring having a double bond;
(ii) $R^1$ and $R^2$, or $R^3$ and $R^4$ together form an alkylidene group;
(iii) $R^1$ and $R^3$, or $R^2$ and $R^4$ are linked to each other to form a double bond; and
(iv) at least one of $R^1$ to $R^4$ represents an unsaturated hydrocarbon group having at least one double bond.

The rubber material for tires according to the invention is characterized in that it comprises the above-described rubber composition.
A tire tread according to the present invention is characterized in that it is formed using the rubber material for a tire.
A tire according to the present invention is characterized in that it is provided with the tire tread.

EFFECTS OF THE INVENTION

The rubber composition according to the present invention can give a tire excellent in braking performance and fuel consumption and is excellent in mechanical strength and fatigue resistance.
The rubber composition according to the present invention can be particularly suitably used for uses such as a tire since it has excellent mechanical strength and fatigue resistance.
A tire produced from the rubber composition according to the present invention is excellent in braking performance, fuel consumption performance, mechanical strength and fatigue resistance.

BEST MODE FOR CARRYING OUT THE INVENTION

Hereinafter, a process for producing a rubber composition according to the present invention will be described in detail.

[Rubber composition]

The rubber composition according to the present invention is characterized in that it is a mixture of a nonconjugated polyene copolymer (A), a diene rubber (B) and a specific compound (C).
The rubber composition according to the present invention is excellent in mechanical strength and fatigue resistance, as compared to the rubber composition comprising no specific compound (C). Thus, the rubber composition of the present invention is applied to, for example, a tire, the obtained tire is excellent in both of braking performance and fuel consumption performance, and also is excellent in rubber elasticity, weather resistance and ozone resistance, in particular mechanical property and fatigue resistance. Furthermore, the tire is also excellent in abrasion resistance.
The reason why the characteristics of the rubber composition are improved is not clear, but it is believed that since the interface between phase structures in the blend of the nonconjugated polyene copolymer (A) and the diene rubber (B) is reinforced by adding a specific component (C), the characteristics are improved.

<Components of rubber composition>

(A) Nonconjugated polyene copolymer

The nonconjugated polyene copolymer (A) used in the present invention is a random copolymer comprising the structural units derived from α-olefin (A1) and the structural units derived from nonconjugated polyene (A2).
The content of structural units derived from α-olefin (A1) is 96 to 70 mol%, preferably 95 to 75 mol% and more preferably 94 to 80 mol%, and the content of structural units derived from nonconjugated polyene (A2) is 4 to 30 mol%, preferably 5 to 25 mol% and more preferably 6 to 20 mol%.
The content of α-olefin (A1) and nonconjugated polyene (A2) in this range is preferred from the viewpoint of improving co-vulcanizability of the nonconjugated polyene copolymer (A) and the diene rubber (C) with each other.
Further, the glass transition temperature (Tg) of the nonconjugated polyene copolymer (A) is -25 to 20°C,

preferably -20 to 15°C, more preferably -15 to 10°C. The glass transition temperature (Tg) in this range is preferred from the viewpoint of improving braking performance.

Further, the glass transition temperature (Tg) can be obtained from temperature-dependent measurements of tan δ in accordance with a viscoelasticity test. In the present invention, the temperature dependency of the loss tangent tan δ (vibration damping index) is determined, using a polymer sheet of 2 mm thickness, on a viscoelasticity tester (viscoelasticity tester manufactured by Rheometrics Inc.; Model RDS-2) under conditions of a measuring temperature of -70 to 30°C, a frequency of 10 Hz, a strain ratio of 0.5% and a temperature elevation rate of 4°C/min, wherein the temperature, at which the value of the tan δ is maximum, is defined as the glass transition temperature (Tg).

A Mooney viscosity [$ML_{1+4}$ (100°C), JIS K6300] of the nonconjugated polyene copolymer (A) is not particularly limited, but preferably 5 to 200, more preferably 5 to 150.

Further, the nonconjugated polyene copolymer (A) has an intrinsic viscosity [η], as measured in decalin at 135°C, of preferably 0.01 to 10 dl/g, more preferably 0.01 to 7 dl/g, particularly preferably 0.01 to 5 dl/g.

When the nonconjugated polyene copolymer (A) has the intrinsic viscosity [η] in the above-mentioned range, the nonconjugated polyene copolymer (A) is excellent in mechanical strength and workability, and the closer the intrinsic viscosity value to the above-mentioned preferable range and further to the above-mentioned more preferable range, the more superior these properties will be. In the present invention, either of the Mooney viscosity or the intrinsic viscosity [η] is preferably in the above-mentioned range. Further, the present invention includes an embodiment in which both of the Mooney viscosity and the intrinsic viscosity [η] are in the above-mentioned range.

When the nonconjugated polyene copolymer (A) is used as a raw material of the rubber material for tires, it is preferable that its crystallinity is lower.

(A1) α-olefin

Examples of the α-olefin (A1) constituting the nonconjugated polyene copolymer (A) used in the present invention include α-olefins having 2 to 20 carbon atoms, preferably 2 to 15 carbon atoms, such as ethylene, propylene, 1-butene, 1-hexene, 1-octene, 1-decene, 1-dodecene and 4-methyl-1-pentene, and more preferably, from the viewpoint of excellent fatigue resistance of the rubber composition, α-olefins having 4 to 8 carbon atoms, particularly butene, hexene and octene. These α-olefins (A1) may be used alone or in a combination of two or more thereof.

The nonconjugated polyene copolymer (A) used in the present invention preferably contains, as the structural units derived from the α-olefin (A1), at least a structural unit (a) derived from ethylene, in which the molar ratio [(a)/(b)] of the structural unit (a) derived from ethylene to the structural units (b) derived from the α-olefin having 3 or more carbon atoms is preferably in the range from 100/0 to 1/99, more preferably from 100/0 to 50/50, still more preferably from 95/5 to 50/50.

(A2) Nonconjugated polyene

The nonconjugated polyene (A2) constituting the nonconjugated polyene copolymer (A) used in the present invention may be cyclic or linear. Examples of the nonconjugated polyene (A2) include nonconjugated cyclic polyene (A2a) and nonconjugated linear polyene (A2b).

(A2a) Nonconjugated cyclic polyene

The nonconjugated cyclic polyene (A2a) constituting the nonconjugated polyene copolymer (A2) used in the present invention may be used alone or in a combination of two or more thereof.

As the nonconjugated cyclic polyene (A2a), a cyclic compound having two or more nonconjugated unsaturated bonds can be used without any restriction, but a nonconjugated cyclic polyene represented by the following formula (1-1) is preferably used:

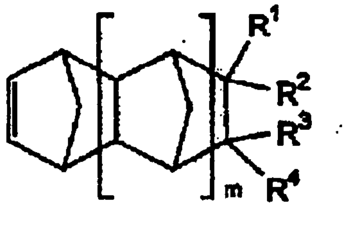

... (1-1)

wherein m is an integer of 0 to 2;

$R^1$ to $R^4$ are each independently an atom or group selected from the group consisting of a hydrogen atom, a halogen atom and a hydrocarbon group, and examples of the halogen atom include a fluorine atom, a chlorine atom, a bromine atom or an iodine atom and the hydrocarbon group may have a double bond;
$R^1$ to $R^4$ may be linked with one another to form a monocyclic or polycyclic ring which may have a double bond;
$R^1$ and $R^2$, or $R^3$ and $R^4$ may together form an alkylidene group; and
$R^1$ and $R^3$, or $R^2$ and $R^4$ may be linked to each other to form a double bond, with the proviso that $R^1$ to $R^4$ satisfy at least one of the following (i) to (iv) conditions:

(i) $R^1$ to $R^4$ are linked with one another to form a monocyclic or polycyclic ring having a double bond;
(ii) $R^1$ and $R^2$, or $R^3$ and $R^4$ together form an alkylidene group;
(iii) $R^1$ and $R^3$, or $R^2$ and $R^4$ are linked to each other to form a double bond; and
(iv) at least one of $R^1$ to $R^4$ represents an unsaturated hydrocarbon group having one or more double bonds.

Examples of the hydrocarbon group represented by $R^1$ to $R^4$ in the above formula (1-1) include an alkyl group having 1 to 20 carbon atoms, a halogenated alkyl group having 1 to 20 carbon atoms, a cycloalkyl group having 3 to 15 carbon atoms, an aromatic hydrocarbon group having 6 to 20 carbon atoms and an unsaturated hydrocarbon group having at least one double bond.

More specifically, examples of the alkyl group include a methyl group, an ethyl group, a propyl group, an isopropyl group, an amyl group, a hexyl group, an octyl group, a decyl group, a dodecyl group and an octadecyl group. Examples of the halogenated alkyl group include those in which at least a portion of the hydrogen atoms in the above-mentioned alkyl group is substituted with a halogen atom such as fluorine, chlorine, bromine or iodine. Examples of the cycloalkyl group include a cyclohexyl group. Examples of the aromatic hydrocarbon group include a phenyl group and a naphthyl group. Examples of the unsaturated hydrocarbon group include a vinyl group and an allyl group.

Further, $R^1$ and $R^2$, $R^3$ and $R^4$, $R^1$ and $R^3$, $R^2$ and $R^4$, $R^1$ and $R^4$, or $R^2$ and $R^3$ in the formula (1-1) may be linked to each other (under cooperation) to form a monocyclic or polycyclic ring, and the monocyclic or polycyclic ring may have double bond(s).

Further, $R^1$ and $R^2$, or $R^3$ and $R^4$ in the formula (1-1) may together form an alkylidene group. Such an alkylidene group is usually an alkylidene group having 1 to 20 carbon atoms and specific examples thereof includes a methylene group ($CH_2$=), an ethylidene group ($CH_3CH$=), a propylidene group ($CH_3CH_2CH$=) and an isopropylidene group ($(CH_3)_2C$=).

Examples of the nonconjugated cyclic polyene (A2a) represented by the formula (1-1) include
a nonconjugated cyclic polyene (A2a-1) having an alkylidene group, in which the alkylidene group is formed by $R^1$ and $R^2$, or $R^3$ and $R^4$,
a polycyclic nonconjugated cyclic polyene (A2a-2) in which $R^1$ to $R^4$ may be linked with one another to form a monocyclic or polycyclic ring having at least one double bond,
a nonconjugated cyclic polyene (A2a-3) having an unsaturated hydrocarbon group in which at least one of $R^1$ to $R^4$ is a monovalent unsaturated hydrocarbon group having at least one double bond, and
a ring-symmetrical nonconjugated cyclic polyene (A2a-4) in which either $R^1$ and $R^3$, or $R^2$ and $R^4$ are linked to each other to form a double bond so that the resulting cyclic polyene has a bilaterally symmetry with respect to a line connecting the bridgehead carbon atoms or the commonly shared carbon atoms of the condensed ring with each other as an axis of symmetry.

Specific examples of the nonconjugated cyclic polyene (A2a-1) having an alkylidene group include those which are represented by the following formula (1-2):

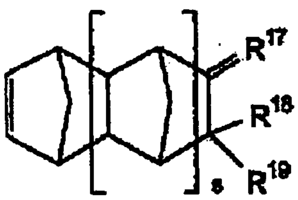

... (1-2)

wherein s represents an integer of 0 to 2; $R^{17}$ represents an alkylidene group; $R^{18}$ and $R^{19}$ each independently represent an atom or a group selected from the group consisting of a hydrogen atom, a halogen atom and a hydrocarbon group and $R^{18}$ and $R^{19}$ may together form an alkylidene group.

Specific examples of the alkylidene group represented by $R^{17}$ in the formula (1-2), include those having 1 to

20 carbon atoms, such as a methylene group, an ethylidene group, a propylidene group and an isopropylidene group.

The symbol s in the formula (1-2) preferably represents 0. Examples of the halogen atom represented by $R^{18}$ and $R^{19}$ include the same as those in the formula (1-1). Examples of the hydrocarbon group include an alkyl group having 1 to 20 carbon atoms, a halogenated alkyl group having 1 to 20 carbon atoms, a cycloalkyl group having 3 to 15 carbon atoms and an aromatic hydrocarbon group having 6 to 20 carbon atoms.

Specific examples of the nonconjugated cyclic polyene (A2a-1) having an alkylidene group represented by the formula (1-2) include 5-methylene-2-norbornene, 5-ethylidene-2-norbornene (ENB), 5-isopropylidene-2-norbornene and the compounds given below. Of these, 5-ethylidene-2-norbornene is preferred.

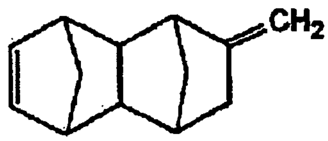
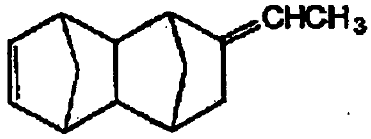

Specific examples of the above-mentioned polycyclic nonconjugated cyclic polyene (A2a-2) include dicyclopentadiene (DCPD), dimethyldicyclopentadiene and the compounds given below.

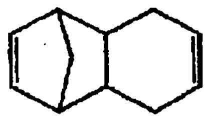
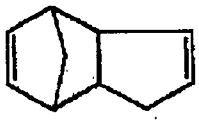
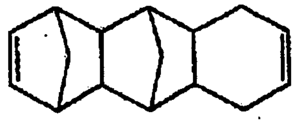

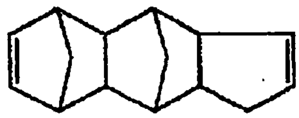

Specific examples of the above-mentioned nonconjugated cyclic polyene (A2a-3) having an unsaturated hydrocarbon group include 5-vinyl-2-norbornene and the compounds given below.

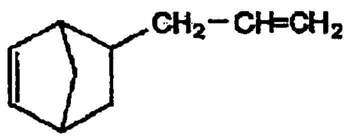
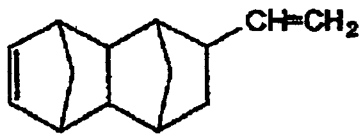

Specific examples of the above-mentioned ring-symmetrical nonconjugated cyclic polyene (A2a-4) include the compounds given below.

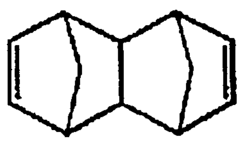
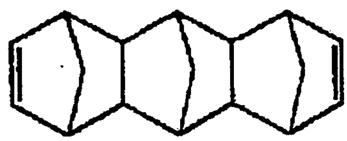

For the nonconjugated cyclic polyene (A2a) represented by the formula (1-1), those in which m represents 0 are preferred, and the nonconjugated cyclic polyenes (A2a-1) having an alkylidene group in which m in the formula (1-1) represents 0, namely, those in which s in the formula (1-2) represents 0, or the polycyclic nonconjugated cyclic polyenes (A2a-2) in which m in the formula (1-1) represents 0, are particularly preferred. Of these, most preferred is the nonconjugated cyclic polyene (A2a-1) having an alkylidene group in which s in the formula (1-2) represents 0, and specifically 5-ethylidene-2-norbornene (ENB) is most preferable.

<u>(A2b) Nonconjugated linear polyene</u>

Examples of the nonconjugated polyene copolymer (A2) used in the present invention include nonconjugated linear polyene (A2b). The nonconjugated linear polyene (A2b) is a compound having two or more nonconjugated unsaturated bonds in one molecule. As the nonconjugated linear polyene (A2b), nonconjugated dienes, nonconjugated trienes, nonconjugated tetraenes or the like may be employed. The nonconjugated linear polyene (A2b) may be used alone or in a combination of two or more thereof.
As the nonconjugated linear polyene (A2b), nonconjugated trienes or tetraenes (A2b-1) represented by the following formula (2-1), above all, nonconjugated trienes (A2b-2) represented by the following formula (2-2) are preferable in view of the balance between the braking performance and the fuel consumption performance of a tire produced from the rubber composition which will be described later, the vulcanization feature of the rubber composition, the handlability (scorching stability) on the vulcanization, and the like.

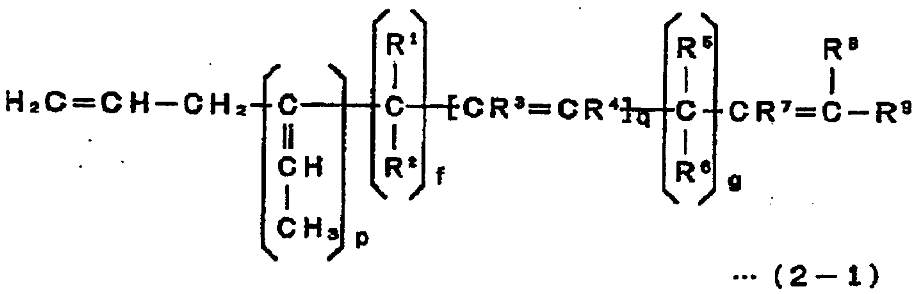

... (2-1)

wherein p and q are 0 or 1 with the proviso that p and q are not simultaneously 0;
f is an integer of 0 to 5 with the proviso that f is not 0 when both p and q are 1;
g is an integer of 1 to 6;
$R^1$, $R^2$, $R^3$, $R^4$, $R^5$, $R^6$ and $R^7$ are each independently a hydrogen atom or an alkyl group having 1 to 3 carbon atoms;
$R^8$ is an alkyl group having 1 to 3 carbon atoms; and
$R^9$ is a hydrogen atom, an alkyl group having 1 to 3 carbon atoms or a group represented by $-(CH_2)_n-CR^{10}=C(R^{11})R^{12}$ wherein n is an integer of 1 to 5, $R^{10}$ and $R^{11}$ are each independently a hydrogen atom or an alkyl group having 1 to 3 carbon atoms and $R^{12}$ is an alkyl group having 1 to 3 carbon atoms, with the proviso that $R^9$ is a hydrogen atom or an alkyl group having 1 to 3 carbon atoms when both p and q are 1.

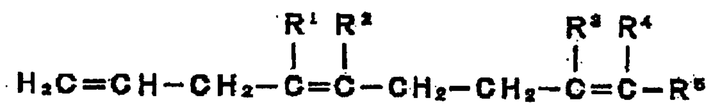

... (2-2)

wherein $R^1$ to $R^5$ are each independently a hydrogen atom, a methyl group or an ethyl group, with the proviso that $R^4$ and $R^5$ do not simultaneously represent a hydrogen atom.

Further, the nonconjugated trienes (A2b-2) represented by the formula (2-2) correspond to the nonconjugated trienes or tetraenes (A2b-1) represented by the formula (2-1), above all, the nonconjugated trienes wherein f is 0, g is 2, p is 0, q is 1 and $R^5$ and $R^6$ are a hydrogen atom. Among the nonconjugated trienes (A2b-2) represented by the formula (2-2), the compounds in which both $R^3$ and $R^5$ are a methyl group are preferred. The nonconjugated polyene

copolymer according to the present invention obtained using such nonconjugated triene (A2b-2) as monomer raw materials can be used for the rubber composition which will be described later and from which tires superior especially in both of the braking performance and the fuel consumption performance can be produced.

Specific examples of the nonconjugated linear polyene (A2b) include 1,4-hexadiene, 1,3-butadiene, isoprene, 7-methyl-1,6-octadiene, 6-methyl-1,6-octadiene, 6,7-dimethyl-1,6-octadiene, 7-methyl-1,6-decadiene, 6-methyl-1,6-nonadiene, 6,7-dimethyl-1,6-nonadiene, 7-methyl-1,6-nonadiene and 6-methyl-1,6-decadiene.

Examples of the nonconjugated trienes and tetraenes (A2b-1) represented by the formula (2-1) include compounds given below (excluding those falling under the formula (2-2)):

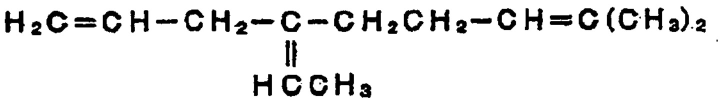

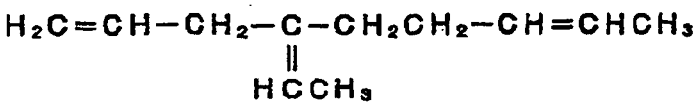

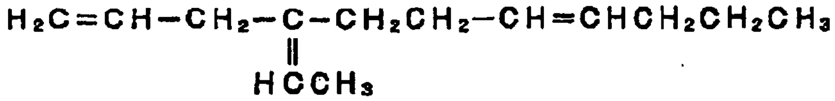

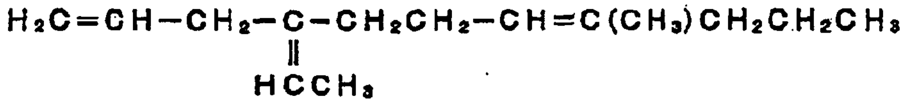

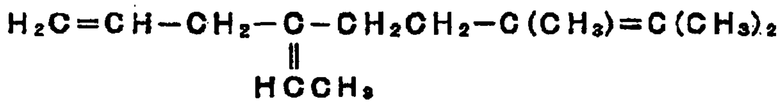

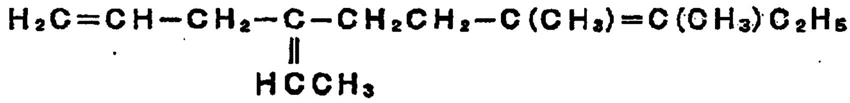

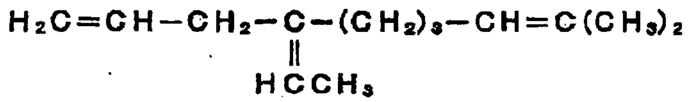

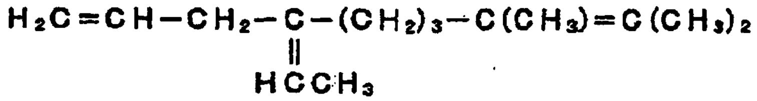

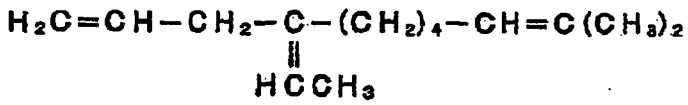

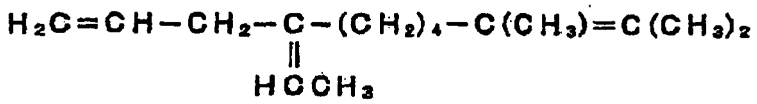

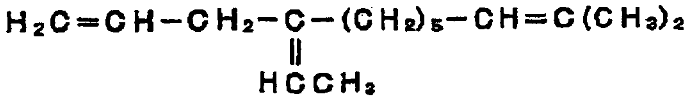

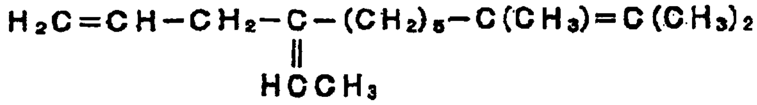

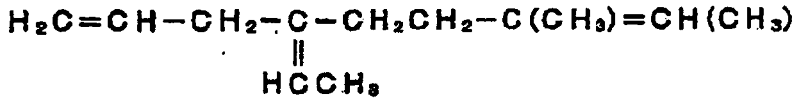

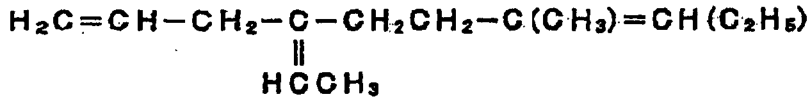

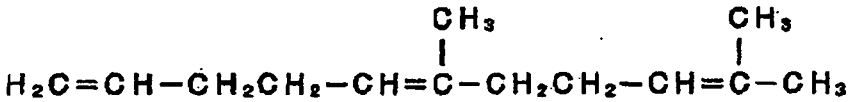

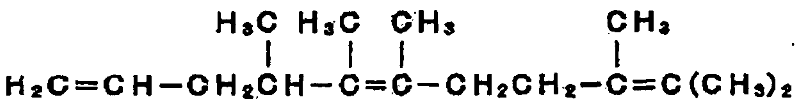

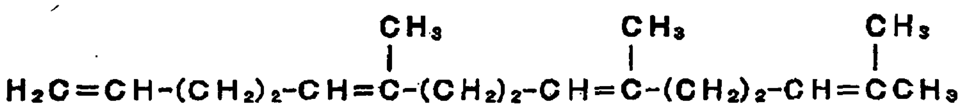

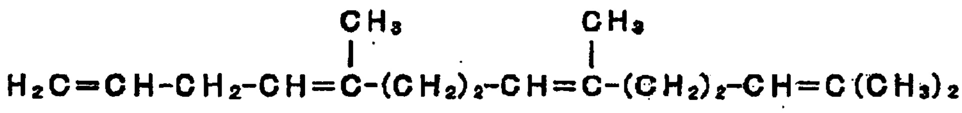

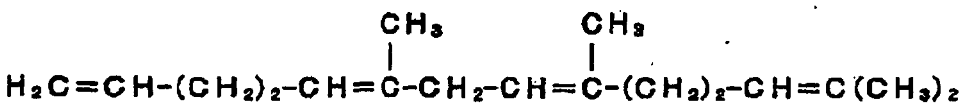

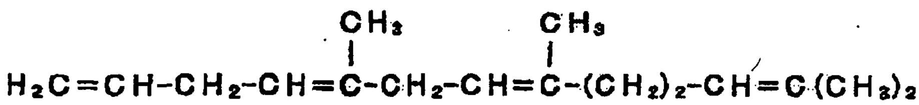

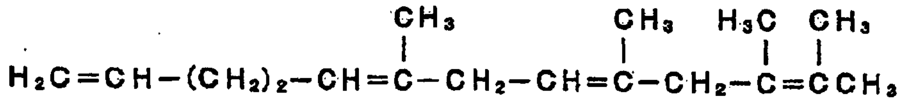

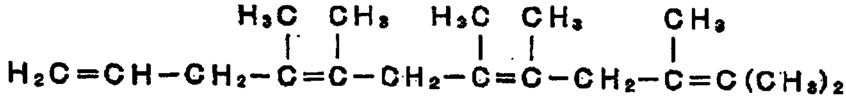

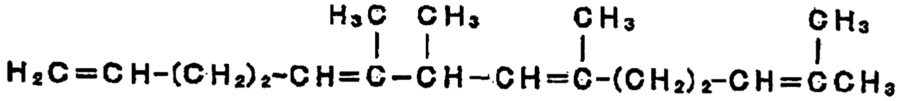

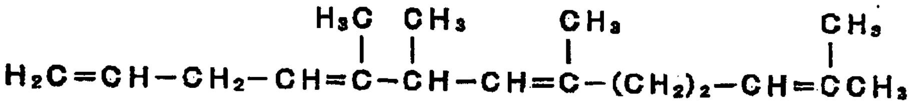

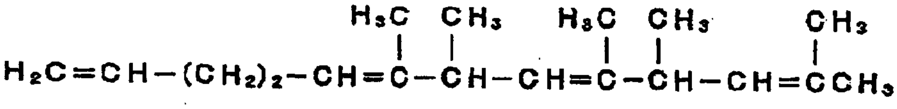

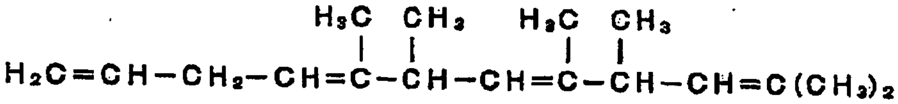

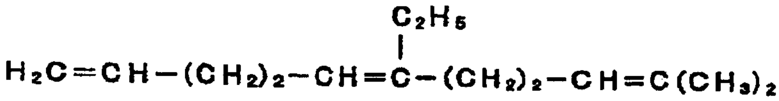

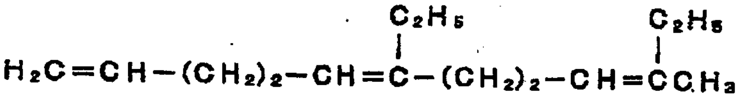

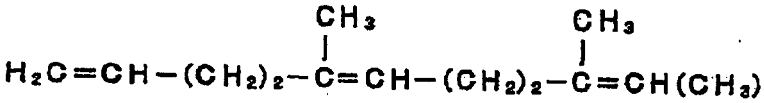

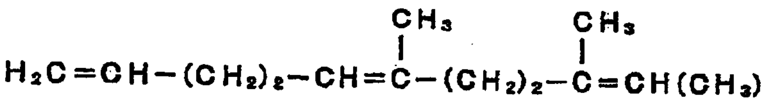

Among the above nonconjugated trienes and tetraenes (A2b-1), the first given 4-ethylidene-8-methyl-1,7-nonadiene is preferable from the viewpoint of excellent braking performance and fuel consumption performance of a tire produced from a rubber composition to be described later.

Specific examples of the nonconjugated trienes (A2b-2) represented by the formula (2-2) include compounds given below:

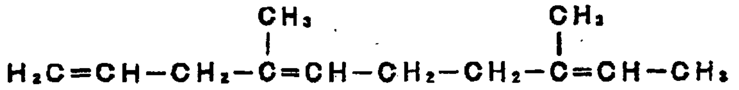

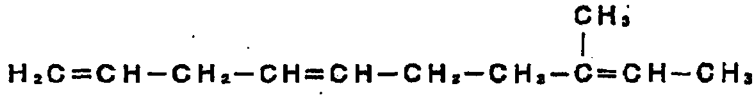

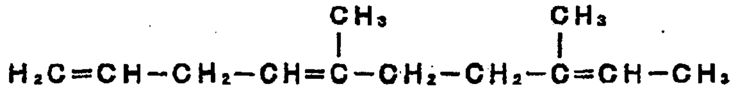

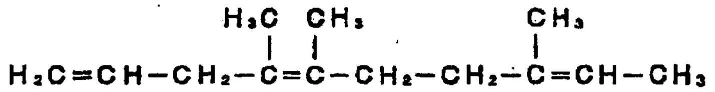

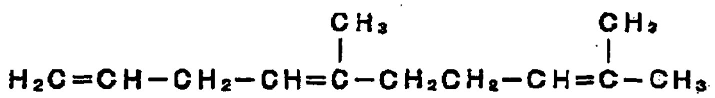

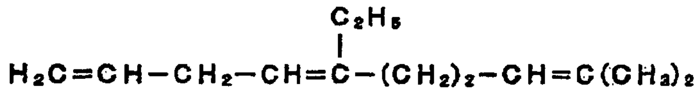

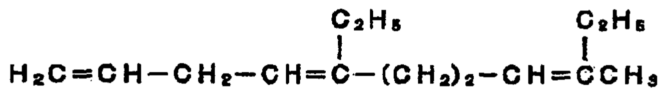

Among the above nonconjugated trienes (A2b-2), the first given 4,8-dimethyl-1,4,8-decatriene is preferred. The nonconjugated polyenes represented by the formulae (2-1) and (2-2) take usually geometrical isomeric structures (trans- and cis-isomers). The nonconjugated polyene (A2b) to be used as a monomer in the present invention may be a mixture of the trans- and cis-isomers or composed solely of either one of the isomers.

The nonconjugated trienes or tetraenes (A2b-1) represented by the formula (2-1) and the nonconjugated trienes (A2b-2) represented by the formula (2-2) can be produced by a known method, for example, a method described in JP-A No. 2001-114837 (paragraphs [0036] to [0042]).

<u>(Process for producing nonconjugated polyene copolymer (A))</u>

The nonconjugated polyene copolymer (A) used in the present invention can be produced by copolymerizing an $\alpha$-olefin (A1) and a nonconjugated polyene (A2) in the presence of a catalyst.

As the catalyst, a known catalyst which comprises a transition metal compound, such as a compound of vanadium (V), zirconium (Zr) and titanium (Ti), and an organoaluminum compound or an organoaluminum-oxy compound and/or an ionized ionic compound, for example, a catalyst described in JP-A No. 2001-114837 (paragraphs [0043] to [0072]) may be employed.

For producing the nonconjugated polyene copolymer according to the present invention, the $\alpha$-olefin (A1) and the nonconjugated polyene (A2) are subjected to copolymerization usually in a liquid phase in the presence of the vanadium or metallocene catalyst. Here, a hydrocarbon solvent is generally used, but monomers may be used as the solvent.

The copolymerization can be carried out under known reaction conditions, for example, those as described in JP-A No. 2001-114837 (paragraphs [0074] to [0081]) filed in the name of an applicant of the present application.

On the copolymerization, the $\alpha$-olefin (A1) and the nonconjugated polyene (A2) are supplied to the polymerization system in such an amount that the nonconjugated polyene copolymer is obtained in the composition specified above. Further, on the copolymerization, a molecular weight regulator such as hydrogen may be used.

By performing the copolymerization as described above, the nonconjugated polyene copolymer (A) used in the present invention is usually obtained as a polymer solution containing the same. This polymer solution is treated in an ordinary manner to obtain the nonconjugated polyene copolymer.

<(B) Diene rubber>

As the diene rubber (B) used in the present invention, known diene rubber having double bond(s) in the main chain can be used without limitation, but a polymer or copolymer rubber made from a conjugated diene compound as the main monomer is preferred. The diene rubber (B) includes natural rubber (NR) and hydrogenated rubber. For the diene rubber (B), those which have iodine values of 100 or more, preferably 200 or more, more preferably 250 or more are preferred.

Examples of the diene rubber (B) include natural rubber (NR), isoprene rubber (IR), styrene/butadiene rubber (SBR), butadiene rubber (BR), chloroprene rubber (CR), acrylonitrile/butadiene rubber (NBR), nitrile rubber and hydrogenated nitrile rubber. Of these, natural rubber (NR), isoprene rubber (IR), styrene/butadiene rubber (SBR) and butadiene rubber (BR) are preferred, particularly preferably styrene/butadiene rubber (SBR). The diene rubbers (B) may be used alone or in a combination of two or more thereof.

As the natural rubber (NR), those standardized by Green Book (International package standards for qualities of commercial grades of natural rubber) may be used. As the isoprene rubber (IR), those having specific gravities in the range of 0.91 to 0.94 and Mooney viscosity [$ML_{1+4}$ (100°C), JIS K6300] in the range of 30 to 120 may be preferably used.

As the styrene/butadiene rubber (SBR), those having specific gravities in the range of 0.91 to 0.98 and Mooney viscosity [$ML_{1+4}$ (100°C), JIS K6300] in the range of 20 to 120 may be preferably used. As the butadiene rubber (BR), those having specific gravities in the range of 0.90 to 0.95 and Mooney viscosity [$ML_{1+4}$ (100°C), JIS K6300] in the range of 20 to 120 may be preferably used.

The diene rubber (B) may be used in the amount such that the weight ratio [(A)/(B)] of the nonconjugated polyene copolymer (A) and the diene rubber (B) is in the range of 60/40 to 0.1/99.9, preferably 50/50 to 1/99, more preferably 40/60 to 5/95. When the proportion of the contents of these components is in the range given above, it is possible to produce tires which are excellent in braking performance and fuel consumption performance, and to obtain a rubber composition which is excellent in weather resistance, the controlling of damping rate and the like. When the proportion of the contents of these components is in the preferable range given above, in particular in the more preferable range, it is possible to produce the rubber composition which is excellent in the balance between the braking performance and the fuel consumption performance, and to obtain the rubber composition which is excellent in weather resistance, the controlling of damping rate and the like.

<(C) Component>

The component (C) used in the present invention includes at least one selected from the group consisting of the components (C1) to (C9) which will be described later, with the proviso that if the component (C) includes the acrylonitrile-conjugated diene copolymer (C4), the component (B) is not an acrylonitrile-conjugated diene copolymer.

The content of each of the components (C1) to (C9) to be used in the rubber composition of the present invention is 1 to 15 parts by weight, based on 100 parts by weight of the total amount of the nonconjugated polyene copolymer (A) and the diene rubber (B). The lower limit of each of the contents is 2 parts by weight, and the upper limit of each of the contents is 13 parts by weight, more preferably 10 parts by weight.

For example, if the component (C1) is used, the copolymers belonging to the component (C1) may be used alone or in a combination of two or more thereof, and if a combination of two or more of the copolymers is used, the total amount of the copolymers is 1 to 15 parts by weight. This will be applied to the components (C2), (C3), (C4), (C5), (C6), (C7), (C8) and (C9).

Each of the components (C1) to (C9) may be used alone or in a combination of two or more thereof. If a combination of two or more of the copolymers is used, the total amount of the components (C1) to (C9) in the rubber composition of the present invention is not particularly limited, but usually 1 to 50 parts by weight, more preferably 1 to 40 parts by weight, even more preferably 1 to 30 parts by weight, based on 100 parts by weight of the total amount of the nonconjugated polyene copolymer (A) and the diene rubber (B).

For example, if a combination of the component (C1) and the component (C2) is used, the component (C1) can be used in the amount of 1 to 15 parts by weight, and the component (C2) can be also used in the amount of 1 to 15 parts by weight. Further, for example, if a combination of the component (C1), the component (C2), the component (C3) and the component (C4) is used, the component (C1) can be used in the amount of 1 to 15 parts by weight, the component (C2) can be used in the amount of 1 to 15 parts by weight, the component (C3) can be used in the amount of 1 to 15 parts by weight, and the component (C4) can be used in the amount of 1 to 15 parts by weight, wherein the total amount thereof is not particularly limited, but preferably in the range of 1 to 50 parts by weight as described above.

Hereinbelow, each of the components (C1) to (C9) will be described.

<Component (C1)>

The component (C1) used in the present invention is a copolymer of an α-olefin having 2 or more carbon atoms and a vinyl compound having a polar group.

(α-Olefin having 2 or more carbon atoms)

"α-olefin having 2 or more carbon atoms" is preferably α-olefin having 2 to 20 carbon atoms. Examples of the α-olefin include ethylene, propylene, 1-butene, 4-methyl-1-pentene, 1-hexene, 1-heptene, 1-octene, 1-nonene, 1-decene, 1-undecene and 1-dodecene.

Of these, ethylene and propylene are preferred, and ethylene is particularly preferable.

(Vinyl compound having a polar group)

"Vinyl compound having a polar group" is specifically a vinyl compound having a hetero atom. Examples of the hetero atom include an oxygen atom, a nitrogen atom, a sulfur atom and a halogen atom.

Examples of the polar group include a C=O group (carbonyl group), a CO-O-R group (ester group), a CO-O-CO group (acid anhydride group), a COOH group (carboxylic acid group), a metal salt of carboxylic acid, an OH group, an epoxy group, a nitrile group and amide group. Of these, an ester group, a carboxylic acid group, an OH group, an epoxy group and an acid anhydride group are preferable, and an ester group containing an alkyl group having 1 to 10 carbon atoms, a carboxylic acid group, and a metal salt of carboxylic acid are particularly preferable. As the metal for forming these metal salts, alkali metals and alkaline earth metals such as zinc, magnesium and sodium are preferable.

As the vinyl compound having a polar group, (meth)acrylic acid; (meth)acrylic acid alkyl esters such as methyl (meth)acrylate, ethyl (meth)acrylate, and butyl (meth)acrylate; vinyl acetate, vinyl carboxylate, vinyl alcohol, maleic anhydride, glycidyl (meth)acrylate, and the like are preferably used.

(Component (C1))

The component (C1) is a copolymer of the α-olefin having 2 or more carbon atoms and the vinyl compound having a polar group.

Examples of the component (C1) include an ethylene/vinyl acetate copolymer (EVA), an ethylene/methyl acrylate copolymer, an ethylene/ethyl acrylate copolymer, an ethylene/butyl acrylate copolymer, an ethylene/methacrylic acid copolymer, an ionomer resin in which the ethylene/methacrylic acid copolymer is intermolecularly crosslinked, and an ethylene/acrylic acid copolymer.

Of these, an ethylene/methacrylic acid copolymer, an ionomer resin in which the ethylene/methacrylic acid copolymer is intramolecularly crosslinked, and an ethylene/acrylic acid copolymer are preferable, and an ethylene/methacrylic acid copolymer is particularly preferable.

The component (C1) may be obtained by a per se known radical polymerization or Ziegler polymerization of each of the above monomers, or otherwise the component (C1) may be a prefabricated product.

The content of the structural units derived from the vinyl compound having a polar group is usually 5 to 50% by weight, preferably 7 to 40% by weight, more preferably 10 to 30% by weight, based on 100% by weight of the total amount of the α-olefin and the vinyl compound having a polar group.

The melt flow rate (MFR; ASTM D 1238, 190°C, a load of 2.16 kg) of the component (C1)) is not particularly limited, but usually 0.001 to 1000 g/10 min, preferably 1 to 500 g/10 min, even more preferably 1 to 400 g/10 min.

The content of each of the component (C1) is 1 to 15 parts by weight, preferably 2 to 13 parts by weight, even more preferably 2 to 10 parts by weight, based on 100 parts by weight of the total amount of the nonconjugated polyene copolymer (A) and the diene rubber (B).

<Component (C2)>

The component (C2) used in the present invention is a copolymer comprising a block segment of an aromatic vinyl polymer and a block segment of a conjugated diene polymer (hereinafter, also referred to as a "block copolymer (c2)"), or a hydrogen adduct of the block copolymer (c2).

The block copolymer (c2) comprises a block segment of a polymer derived from polymerization of an aromatic vinyl site, and a block segment of a polymer derived from polymerization of at least one monomer having conjugated double bond(s).

The block copolymer (c2) is preferably a styrene/diene block copolymer.

(Block segment of an aromatic vinyl polymer)

Examples of the aromatic vinyl compound include styrene, α-methyl styrene, vinyl toluene, p-tert-butyl styrene, divinyl benzene, p-methyl styrene, 4-n-propyl styrene, 2,4-dimethyl styrene, 3,5-diethyl styrene, 1,1-diphenyl-styrene, 2,4,6-trimethyl styrene, 4-cyclohexyl styrene and 3-methyl-5-n-hexyl styrene, and among them, styrene is preferable.
The block segment of an aromatic vinyl polymer may be derived from polymerization of one or two or more of the aromatic vinyl compounds.

(Block segment of a conjugated diene polymer)

Examples of the conjugated diene compound include the compounds having conjugated double bond(s) such as butadiene, isoprene, 1,3-pentadiene, 2,3-dimethyl-1,3-butadiene, piperylene, 3-butyl-1,3-octadiene, 1-phenyl-1,3-butadiene, 1,3-octadiene and 4-ethyl-1,3-hexadiene.
The block segment of a conjugated diene polymer can be derived from polymerization of one or two or more of these conjugated diene compounds. Preferably, butadiene, isoprene, and a mixture thereof are polymerized.

(Component (C2))

The block copolymer (c2) essentially comprises a polymer block A derived from at least one aromatic vinyl compound, and a polymer block B derived from at least one compound having conjugated double bond(s).
In the block copolymer (c2), a molar ratio of the structural units derived from the aromatic vinyl compound and the structural units derived from the conjugated diene compound (structural units derived from the aromatic vinyl compound/ structural units derived from the conjugated diene compound) is 5/95 to 70/30, preferably 10/90 to 60/40.
The molecular structure of the block copolymer (c2) may any one of linear, branched and radial types, or a combination of either type.
The styrene/diene block copolymer can be depicted by a general disposition such as $(A\text{-}B)_xA$ and $(B\text{-}A)_x$. But A and B are the same as described above, A's and B's may differ in their monomers or molecular weights, and x is the number of the (A-B) structures in the polymers.
According to the present invention, among them, a $(A\text{-}B)_xA$ type of the copolymer is preferably used, wherein x is preferably 1.
The unsaturated bonds remaining in the block copolymer (c2) may be partially or completely hydrogenated.
As the block copolymer (c2) and a hydrogen adduct thereof used in the present invention, commercially available products can be widely used. Alternatively, they can be easily prepared by living polymerization.
As the component (C2),
**[0102]** SEBS (a triblock copolymer or diblock copolymer in which polystyrene and hydrogenated polybutadiene are bonded, for example, a product name SEPTON (Kuraray Co., Ltd.)),
**[0103]** SEPS (a triblock copolymer or diblock copolymer in which polystyrene and hydrogenated polyisoprene are bonded, for example, a product name SEPTON (Kuraray Co., Ltd.)),
**[0104]** SEEPS (a triblock copolymer or diblock copolymer in which polystyrene and hydrogenated polyisoprene are bonded, for example, a product name SEPTON (Kuraray Co., Ltd.)), and
SIS (a triblock copolymer in which polystyrene and vinyl-polyisoprene are bonded, for example, a product name HYBRAR (Kuraray Co., Ltd.))
are preferable, and among them, SIS is particularly preferable.
The content of the structural units derived from styrene in SIS is preferably 5 to 70% by weight. Further, the melt flow rate (MFR; ASTM D 1238, 230°C, a load of 2.16 kg) of SIS is not particularly limited, but preferably 500 g/10 min or less.
The content of the component (C2) is 1 to 15 parts by weight, preferably 2 to 13 parts by weight, even more preferably 2 to 10 parts by weight, based on 100 parts by weight of the total amount of the nonconjugated polyene copolymer (A) and the diene rubber (B).

<Component (C3)>

The component (C3) used in the present invention is formed by polymerization or copolymerization of one or two or more of α-olefins, and is an α-olefin polymer or copolymer having the total number of carbon atoms of the α-olefin of 6 or less, with the proviso that there are at least two α-olefins, and on the other hand, in the case of the copolymer comprising α-olefin having 5 or less carbon atoms, the content of the structural units derived from at least one α-olefin is in the range of 5 to 95 mol%.
Moreover, the monomers other than α-olefin such as a nonconjugated polyene do not belong to the component

(C3).

(α-Olefin)

For the component (C3), the α-olefin of the component (C3) is an α-olefin having 2 or more carbon atoms, preferably an α-olefin having 2 to 20 carbon atoms.

Examples of the α-olefin include ethylene, propylene, 1-butene, 4-methyl-1-pentene, 1-hexene, 1-heptene, 1-octene, 1-nonene, 1-decene, 1-undecene and 1-dodecene.

The total number of carbon atoms of the α-olefin refers to, in the case of using one α-olefin, the number of carbon atoms of the α-olefin, and in the case of using two or more α-olefins, the totally summed number of carbon atoms of the α-olefins. For example, in the case of a propylene/butene copolymer, since the propylene has 3 carbon atoms, and the butene has 4 carbon atoms, the total number of carbon atoms of the α-olefin is 7.

For the component (C3), the total number of carbon atoms of the α-olefin is 6 or more, preferably 7 or more. The total number of carbon atoms of the α-olefin is not particularly limited, but usually 40 or less, preferably 30 or less.

(α-Olefin polymer or α-olefin copolymer)

For the component (C3), examples of the polymer formed by polymerization of one α-olefin include poly(4-methyl-1-pentene), poly(1-hexene), poly(1-octene) and poly(1-decene).

Further, examples of the polymer formed by copolymerization of two or more α-olefins include
a 1-butene/propylene copolymer (propylene content: 50 mol% or less),
a propylene/1-butene copolymer (1-butene content: less than 50 mol%),
an ethylene/1-butene copolymer (1-butene content: 50 mol% or less),
a 1-butene/ethylene copolymer (ethylene content: less than 50 mol%),
an ethylene/1-hexene copolymer (1-hexene content: 50 mol% or less), and
an ethylene/1-octene copolymer (1-octene content: 50 mol% or less).

Of these, a 1-butene/propylene copolymer (propylene content: 50 mol% or less), and an ethylene/1-octene copolymer (1-octene content: 50 mol% or less) are preferable, and a 1-butene/propylene copolymer (propylene content: 50 mol% or less) is particularly preferable.

In the case where two or more α-olefins are contained and an olefin having 5 or less carbon atoms is contained, the content of the structural units derived from at least one α-olefin is in the range of 5 to 95 mol%.

The melt flow rate (MFR; ASTM D 1238, 190°C, a load of 2.16 kg), indicative of the molecular weight of the component (C3), is usually 0.01 to 200 g/10 min, preferably 0.01 to 100 g/10 min.

The density of the 1-butene/propylene copolymer (propylene content: 50 mol% or less) is usually 880 to 930 $kg/m^3$, preferably 880 to 930 $kg/m^3$, and the melt flow rate (MFR; ASTM D 1238, 190°C, a load of 2.16 kg) is usually 0.01 to 200 g/10 min, preferably 0.01 to 100 g/10 min.

For the ethylene/1-octene copolymer, the content of the structural units derived from 1-octene is preferably 0.1 to 10 mol%. Further, the melt flow rate (MFR; ASTM D 1238, 190°C, a load of 2.16 kg) of the ethylene/1-octene copolymer is usually 0.01 to 200 g/10 min, preferably 0.01 to 100 g/10 min.

Such the polymers or copolymers can be prepared by a per se known process using a metallocene catalyst, a solid phase titanium catalyst, or a vanadium catalyst.

The content of the component (C3) is 1 to 15 parts by weight, preferably 2 to 13 parts by weight, more preferably 2 to 10 parts by weight, based on 100 parts by weight of the total amount of the nonconjugated polyene copolymer (A) and the diene rubber (B).

<Component (C4)>

The component (C4) used in the present invention, that is, a nitrile/butadiene rubber (NBR) is well-known, and described in, for example, "14303 Chemical Product, pp. 1209-1210 (The Chemical Daily Co., Ltd., published on Jan. 28, 2003), or the like.

Examples of the component (C4) which is commercially available include "Nipol (ZEON Corporation.)".

The acrylonitrile content in the component (C4) is 10 to 50% by weight, preferably 10 to 40% by weight.

Further, the Mooney viscosity [$ML_{1+4}$ (100°C), JIS K6300] of the component (C4) is usually 20 to 200, preferably 20 to 100.

The content of the component (C4) is 1 to 15 parts by weight, preferably 2 to 13 parts by weight, more preferably 2 to 10 parts by weight, based on 100 parts by weight of the total amount of the nonconjugated polyene copolymer (A) and the diene rubber (B).

Further, if the component (C4) is used as a component (C), the diene rubber (B) should not be an acrylonitrile-conjugated diene copolymer.

<Component (C5) >

The component (C5) used in the present invention is an olefinic thermoplastic elastomer obtained by dynamically heat-treating 5 to 60% by weight of a polyethylene resin (C5-1), and 95 to 40% by weight of an ethylene/α-olefin copolymer (C5-2) which has a Mooney viscosity [$ML_{1+4}$ (100°C), JIS K6300] of 90 to 250 and an ethylene content of 70 to 95 mol%, in the absence of a crosslinking agent.

(Polyethylene resin (C5-1))

As the polyethylene resin (C5-1), a known polyethylene resin such as a high density polyethylene, a medium density polyethylene, a linear low density polyethylene, and a low density polyethylene can be used without any restriction, but a linear low density polyethylene is preferable, and a linear low density polyethylene polymerized using a metallocene catalyst is particularly preferable.

The melt flow rate (MFR; ASTM D 1238, 190°C, a load of 2.16 kg) of the polyethylene resin (C5-1) is 0.01 to 100 g/10 min, preferably 0.01 to 50 g/10 min.

In the case where the linear low density polyethylene is used as the polyethylene resin (C5-1), the melt flow rate (MFR; ASTM D 1238, 190°C, a load of 2.16 kg) is 0.1 to 30 g/10 min, preferably 0.2 to 20 g/10 min, and its density is 0.88 to 0.95 g/$cm^3$, preferably 0.91 to 0.94g/$cm^3$.

The polyethylene resin (C5-1) may be a homopolymer of ethylene, or a copolymer of ethylene with a small amount, for example, 10 mol% or less of other monomer(s).

Examples of the other monomer include an α-olefin having 3 to 20 carbon atoms, preferably 3 to 8 carbon atoms; a vinyl monomer such as vinyl acetate and ethyl acrylate; and the like. Examples of the α-olefin used as the other monomer include propylene, 1-butene, 4-methyl-1-pentene, 1-hexene and 1-octene. The other monomer may be used alone or in a combination two or more thereof.

The polyethylene resins (C5-1) may be used alone or in a combination two or more thereof.

(Ethylene/α-olefin copolymer (C5-2))

As the ethylene/α-olefin copolymer (C5-2), a known ethylene/α-olefin copolymer can be used.

The Mooney viscosity [$ML_{1+4}$ (100°C), JIS K6300] of the ethylene/α-olefin copolymer (C5-2) is 90 to 250, preferably 100 to 200, even more preferably 110 to 180.

Further, the content of the structural units derived from ethylene in the ethylene/α-olefin copolymer (C5-2) is 70 to 95 mol%, preferably 70 to 90 mol%, even more preferably 75 to 90 mol%, and particularly preferably 75 to 85 mol%.

The ethylene/α-olefin copolymer (C5-2) may be a copolymer comprising ethylene and an α-olefin having 3 to 20 carbon atoms, preferably 3 to 8 carbon atoms, or otherwise further copolymerized with monomers other than the α-olefin. Examples of the monomers other than α-olefin include nonconjugated polyene.

Examples of the ethylene/α-olefin copolymer (C5-2) include an ethylene/α-olefin copolymer, and an ethylene/α-olefin/nonconjugated polyene copolymer. Of these, an ethylene/α-olefin/nonconjugated polyene copolymer is preferable.

For the ethylene/α-olefin copolymer (C5-2), examples of the α-olefin to be copolymerized include propylene, 1-butene, pentene, 4-methyl-1-pentene, 1-hexene and 1-octene. The α-olefins may be used alone or in a combination two or more thereof.

For the ethylene/α-olefin copolymer (C5-2), examples of the nonconjugated polyene to be copolymerized with ethylene and α-olefin include nonconjugated diene such as dicyclopentadiene, 1,4-hexadiene, cyclooctadiene, methylene norbornene and ethylidene norbornene. The nonconjugated polyenes may be used alone or in a combination two or more thereof.

The iodine value of the ethylene/α-olefin-nonconjugated polyene copolymer is usually 0.1 to 50, preferably 5 to 30.

The ethylene·α-olefinic copolymers (C5-2) may be used alone or in a combination two or more thereof.

The ethylene/α-olefin copolymer (C5-2) copolymers can be prepared by a per se known process using a metallocene catalyst or a vanadium catalyst, and for example, an ethylene/α-olefin/nonconjugated polyene copolymer can be prepared by the method as described in "Polymer Preparation Process (published by Kogyo Chosakai Publishing Co., Ltd., pp. 309 to 330)".

Further, the ethylene/α-olefin copolymer (C5-2) may be either a random copolymer or a block copolymer.

(Component (C5))

The component (C5) is an olefinic thermoplastic elastomer obtained by dynamically heat-treating the polyethylene resin (C5-1) and the ethylene/α-olefin copolymer in the absence of a crosslinking agent.

For the content of the polyethylene resin (C5-1) and the ethylene/α-olefin copolymer (C5-2) in the component (C5), the content of the polyethylene resin (C5-1) is 5 to 60% by weight, preferably 10 to 50% by weight, and the content of the ethylene/α-olefin copolymer (C5-2) is 40 to 95% by weight, preferably 50 to 90% by weight, based on 100% by weight of the total content of the polyethylene resin (C5-1) and the ethylene/α-olefin copolymer (C5-2).

The component (C5) is preferably a thermoplastic elastomer obtained by dynamically heat-treating an elastomer composition comprising the polyethylene resin (C5-1) and the ethylene/α-olefin copolymer (C5-2) in the absence of a crosslinking agent, and particularly preferably a thermoplastic elastomer obtained by dynamically heat-treatment by a twin screw extrude under the following conditions:

$$4.8 < (T-130)/100 + 2.2\log P + \log Q - \log R < 7.0 \quad (2),$$

preferably

$$5.0 < (T-130)/100 + 2.2\log P + \log Q - \log R < 6.8 \quad (2')$$

even more preferably,

$$5.3 < (T-130)/100 + 2.2\log P + \log Q - \log R < 6.5 \quad (2'')$$

[in the Formulae (2), (2') and (2"), T is a resin temperature at die outlet of a twin screw extruder (°C), P is a screw diameter of a twin screw extruder (mm), Q is a maximum shearing velocity generated at the a twin screw extruder (sec-1), and R is an extrusion throughput of the twin screw extruder (kg/h). The maximum shearing velocity Q (sec-1) is determined by an equation: $Q=P\times\pi\times S/U$, wherein P is a screw diameter of a twin screw extruder (mm), S is the number of revolution per second of the screw (rps), and U is a distance at narrowest portion of clearance between the barrel inner wall and the screw kneading segment (mm)].

The component (C5) preferably has the following characteristics (X), (Y) and (Z):

$$(X)\quad 9 \leq Y - 0.43X \leq 27 \quad (1)$$

preferably,

$$9 \leq Y - 0.43X \leq 26 \quad (1')$$

even more preferably,

$$10 \leq Y - 0.43X \leq 26 \quad (1'')$$

[In the Formula (1), (1') and (1"),

X is a JIS A hardness (no unit) of an olefinic thermoplastic elastomer measured in accordance with JIS K6253

(1997); and

Y is a permanent compression set (unit: %) of an olefinic thermoplastic elastomer measured in accordance with JIS K6262 (1997) under the conditions of 70°C and 22 hours.

(Y) The tensile strength as measured in accordance with JIS K6251 (1993) is 5 to 30 MPa, preferably 8 to 30 MPa, even more preferably 12 to 30 MPa.

(Z) The permanent elongation in accordance with JIS K6301 (1971) is 18% or less, preferably 0.5 to 15%, even more preferably 0.5 to 12%.

The above characteristics (X) through (Z) are measured in the following manner:

JIS A hardness: Measured in accordance with JIS K6253 (1997). Instantaneous value obtained by a spring type hardness tester type A.

Permanent compression set: Measured in accordance with JIS K6262 (1997). Using a sample having a thickness of 12.7 mm and a diameter of 29.0 mm (25% compression, 70°C and 22 hours)

Tensile strength: Measured in accordance with JIS K6251 (1993). (JIS-3 dumbbell, tension speed: 200 mm/min).

Permanent elongation: Measured in accordance with JIS K6301 (1971) (JIS-3 dumbbell, elongation 100%, maintenance time: 10 minutes, 10 minutes after removal of a load).

The olefinic thermoplastic elastomer composition which is a raw material for the preparation of the olefinic thermoplastic elastomer (component (C5)) used in the present invention is a composition, in which the content of the polyethylene resin (C5-1) is 5 to 60% by weight, preferably 10 to 50% by weight, and the ethylene/α-olefin copolymer (C5-2) is 40 to 95% by weight, preferably 50 to 90% by weight, based on 100% by weight of the total content of the polyethylene resin (C5-1) and the ethylene/α-olefin copolymer (C5-2).

The olefinic thermoplastic elastomer composition is preferably a composition which is obtained by dynamically heat-treating a mixture comprising 5 to 60% by weight, preferably 10 to 50% by weight of the polyethylene resin (C5-1), and 40 to 95% by weight, preferably 50 to 90% by weight of the ethylene/α-olefin copolymer (C5-2), based on 100% by weight of the total content of the polyethylene resin (C5-1) and the ethylene/α-olefin copolymer (C5-2), in the absence of a crosslinking agent.

The olefinic thermoplastic elastomer (component (C5)) and the elastomer composition, which are used in the present invention, may contain the polypropylene resin (C5-3). As the polypropylene resin (C5-3), a known polypropylene resin can be used without restriction. Specific examples thereof include the following polypropylene resins, and the like:

(1) a propylene homopolymer

(2) a random copolymer of 90 mol% or more of propylene and 10 mol% or less of other α-olefin (propylene/α-olefin random copolymer)

(3) a block copolymer of 70 mol% or more of propylene and 30 mol% or less of other α-olefin (propylene/α-olefin block copolymer). Examples of the α-olefins to be copolymerized with propylene include an α-olefin having 2 to 20 carbon atoms, preferably 2 to 8 carbon atoms such as ethylene, 1-butene, 4-methyl-1-pentene, 1-hexene and 1-octene.

As the polypropylene resin (C5-3), the propylene homopolymer (1) and the propylene·α-olefin random copolymer (2) are preferable, and those having a melt flow rate (MFR; ASTM D 1238, 190°C, a load of 2.16 kg) of 0.1 to 50 g/10 min. are particularly preferable. The polypropylene resin (C5-3) may be used alone or in a combination of two or more thereof.

The content of the polypropylene resin (C) in the olefinic thermoplastic elastomer (component (C5)) and the elastomer composition of the present invention is preferably 30 parts by weight or less, more preferably 2 to 30 parts by weight, based on 100 parts by weight of the total content of the polyethylene resin (C5-1) and the ethylene/α-olefin copolymer (C5-2).

The content of the component (C5) is 1 to 15 parts by weight, preferably 2 to 13 parts by weight, more preferably 2 to 10 parts by weight, based on 100 parts by weight of the total amount of the nonconjugated polyene copolymer (A) and the diene rubber (B).

The hardness [JIS K 6253] of the component (C5) is 40 to 90, preferably 50 to 80.

Further, the content of the polyethylene resin (C5-1) in the component (C5) is 5 to 60% by weight, preferably 15 to 55% by weight.

<Component (C6)>

The component (C6) of the present invention is an α-olefin/nonconjugated diene copolymer,
which can be obtained by copolymerization one or two or more α-olefins with a nonconjugated diene represented by the following formula [I] or [II], and
has a content of the nonconjugated polyene of 0.1 to 30 mol% based on 100 mol% of the total amount of the α-olefin

and the nonconjugated polyene, and
a glass transition temperature of lower than -25°C.

(α-Olefin)

As the α-olefin, the α-olefin having 2 to 20 carbon atoms, in particular, the α-olefin having 2 to 8 is preferable. As the α-olefin, ethylene, propylene, 1-butene, 1-hexene, 1-octene, 4-methyl-1-pentene, or the like can be used without any restriction.

The α-olefins may be used alone or in a combination of two or more thereof. Particularly, use in a combination of ethylene and an α-olefin having 3 or more carbon atoms is preferable.

(Nonconjugated polyene)

The nonconjugated polyene used in the component (C6) is a norbornene compound represented by the following general formula [I] or [II].

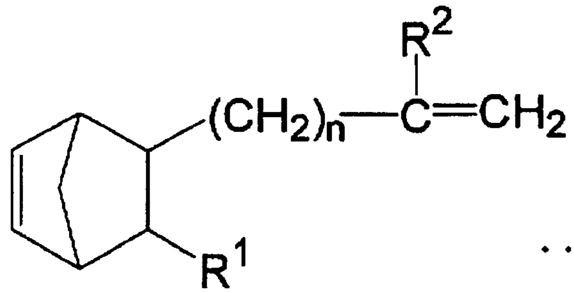

· · · [ I ]

In the general formula [I], n is an integer of 0 to 10, $R^1$ is a hydrogen atom or an alkyl group having 1 to 10 carbon atoms, and $R^2$ is a hydrogen atom or an alkyl group having 1 to 5 carbon atoms.

For $R^1$, examples of the alkyl group having 1 to 10 carbon atoms include a methyl group, an ethyl group, a propyl group, an isopropyl group, an n-butyl group, an isobutyl group, a sec-butyl group, a t-butyl group, an n-pentyl group, an isopentyl group, a t-pentyl group, a neopentyl group, a hexyl group, an isohexyl group, a heptyl group, an octyl group, a nonyl group, and a decyl group.

For $R^2$, examples of the alkyl group having 1 to 5 carbon atoms include an alkyl group having 1 to 5 carbon atoms, among the above specific examples of $R^1$.

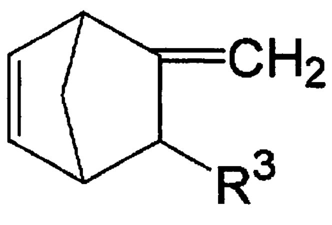

· · · [ II ]

In the general formula [II], $R^3$ is a hydrogen atom or an alkyl group having 1 to 10 carbon atoms.

Specific examples of $R^3$ include an alkyl group as for the above specific examples of $R^1$.

Examples of the norbornene compound represented by the general formula [I] or [II] include:

5-methylene-2-norbornene, 5-vinyl-2-norbornene, 5-(2-propenyl)-2-norbornene, 5-(3-butenyl)-2-norbornene, 5-(1-methyl-2-propenyl)-2-norbornene, 5-(4-pentenyl)-2-norbornene, 5-(1-methyl-3-butenyl)-2-norbornene, 5-(5-hexenyl)-2-norbornene, 5-(1-methyl-4-pentenyl)-2-norbornene, 5-(2,3-dimethyl-3-butenyl)-2-norbornene, 5-(2-ethyl-3-butenyl)-2-norbornene, 5-(6-heptenyl)-2-norbornene, 5-(3-methyl-5-hexenyl)-2-norbornene, 5-(3,4-dimethyl-4-pentenyl)-2-norbornene, 5-(3-ethyl-4-pentenyl)-2-norbornene, 5-(7-octenyl)-2-norbornene, 5-(2-methyl-6-heptenyl)-2-norbornene, 5-(1,2-dimethyl-5-hexenyl)-2-norbornene, 5-(5-ethyl-5-hexenyl)-2-norbornene,and 5-(1,2,3-trimethyl-4-pentenyl)-2-norbornene.

Of these, 5-vinyl-2-norbornene, 5-methylene-2-norbornene, 5-(2-prophenyl)-2-norbornene, 5-(3-butenyl)-2-norbornene, 5-(4-pentenyl)-2-norbornene, 5-(5-hexenyl)-2-norbornene, or 5-(6-heptenyl)-2-norbornene, 5-(7-octenyl)-2-norbornene is preferable.

The norbornene compounds may be used alone or in a combination of two or more thereof.

(Component (C6))

The component (C6) used in the present invention is an α-olefin/nonconjugated diene copolymer, and preferably a random copolymer of ethylene, an α-olefin and a nonconjugated polyene.

The content of the nonconjugated polyene, used in the synthesis of the component (C6), in the component (C6) is 0.1 to 30 mol%, preferably 0.1 to 10 mol%, even more preferably 0.1 to 5 mol%, based on 100 mol% of the total amount of the α-olefin and the nonconjugated polyenes [I] and [II].

Further, the glass transition temperature of the component (C6) is lower than -25°C, preferably -28°C or lower, more preferably-30°C or lower.

Further, the glass transition temperature (Tg) can be obtained from temperature-dependent measurements of tan δ in accordance with a viscoelasticity test. In the present invention, the temperature dependency of the loss tangent tan δ (vibration damping index) is determined, using a polymer sheet of 2 mm thickness, on a viscoelasticity tester (viscoelasticity tester manufactured by Rheometrics Inc.; Model RDS-2) under conditions of a measuring temperature of -70 to 30°C, a frequency of 10 Hz, a strain ratio of 0.5% and a temperature elevation rate of 4°C/min, wherein the temperature, at which the value of the tan δ is maximum, defined as the glass transition temperature (Tg).

The iodine value of the component (C6) is 0.5 to 50 (g/100 g), preferably 0.8 to 40 (g/100 g), even more preferably 1 to 30 (g/100 g), particularly preferably 1.5 to 25 (g/100 g).

The intrinsic viscosity [η], as measured in decalin at 135°C, of the component (C6) is 0.01 to 10 dl/g, preferably 0.01 to 7 dl/g, and more preferably 0.5 to 5 dl/g.

Further, the Mooney viscosity [$ML_{1+4}$ (150°C), JIS K6300] of the component (C6) is preferably 1 to 100, even more preferably 1 to 80.

Further, if the α-olefin comprises ethylene and an α-olefin having 3 or more carbon atoms, the component (C6) has a molar ratio [(a)/(b)] of the structural unit (a) derived from ethylene to the structural units (b) derived from the α-olefin (having 3 or more carbon atoms) of 35/65 to 95/5, preferably 50/50 to 90/10, even more preferably 55/45 to 85/15, particularly preferably 60/40 to 80/20.

The component (C6) can be prepared by copolymerizing the above-described α-olefin and the nonconjugated polyene in a per se known process, using a soluble vanadium compound represented by $VO(OR)_nX_{3-n}$ (wherein R is a hydrocarbon group, X is a halogen atom, and n is 0 or an integer of 1 to 3), or a vanadium compound represented by $VX_4$ (wherein X is a halogen atom), or a metallocene catalyst as described in JP-A No. 9-40586. A specific method for preparing the component (C6) is described in International Patent No. WO00/55251.

The content of the component (C6) is 1 to 15 parts by weight, preferably 2 to 13 parts by weight, more preferably 2 to 10 parts by weight, based on 100 parts by weight of the total amount of the nonconjugated polyene copolymer (A) and the diene rubber (B).

<Component (C7)>

The component (C7) used in the present invention is an α-olefin·nonconjugated diene copolymer, which can be prepared by copolymerizing one or two or more of the α-olefins having 2 or more carbon atoms and the nonconjugated polyene represented by the following formula (2-1), and has a content of nonconjugated polyene of 0.1 to 30 mol%, based on 100 mol% of the total amount of the α-olefin and the nonconjugated polyene, and as glass transition temperature of lower than -25°C.

(α-Olefin)

As the α-olefin, an α-olefin having 2 to 20 carbon atoms, particularly an α-olefin having 2 to 8 carbon atoms is preferable. As the α-olefin, ethylene, propylene, 1-butene, 1-hexene, 1-octene, 4-methyl-1-pentene, or the like can be used without any restriction.

The α-olefins may be used alone or in a combination of two or more thereof. Particularly, use in a combination of ethylene and an α-olefin having 3 or more carbon atoms is preferable.

(Nonconjugated polyene)

The nonconjugated polyene used in the component (C7) is represented by the following general formula (2-1).

Of these, the nonconjugated triene represented by the following general formula (2-2) is preferable.

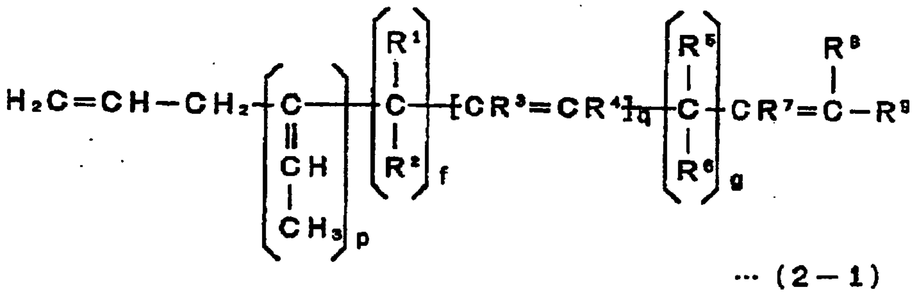

··· (2−1) ;

wherein p and q are 0 or 1 with the proviso that p and q are not simultaneously 0;
f is an integer of 0 to 5 with the proviso that f is not 0 when both p and q are 1;
g is an integer of 1 to 6;
$R^1$, $R^2$, $R^3$, $R^4$, $R^5$, $R^6$ and $R^7$ are each independently a hydrogen atom or an alkyl group having 1 to 3 carbon atoms;
$R^8$ is an alkyl group having 1 to 3 carbon atoms; and
$R^9$ is a hydrogen atom, an alkyl group having 1 to 3 carbon atoms or a group represented by $-(CH_2)_n-CR^{10}=C(R^{11})R^{12}$ wherein n is an integer of 1 to 5, $R^{10}$ and $R^{11}$ are each independently a hydrogen atom or an alkyl group having 1 to 3 carbon atoms and $R^{12}$ is an alkyl group having 1 to 3 carbon atoms, with the proviso that $R^9$ is a hydrogen atom or an alkyl group having 1 to 3 carbon atoms when both p and q are 1.

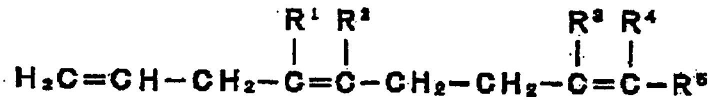

··· (2−2)

wherein $R^1$ to $R^5$ are each independently a hydrogen atom, a methyl group or an ethyl group, with the proviso that $R^4$ and $R^5$ do not simultaneously represent a hydrogen atom.

Further, the nonconjugated trienes represented by the formula (2-2) correspond to the nonconjugated trienes or tetraenes represented by the formula (2-1), above all, the nonconjugated trienes wherein f is 0, g is 2, p is 0, q is 1 and $R^5$ and $R^6$ are a hydrogen atom.

Examples of the nonconjugated trienes and tetraenes (A2b-1) represented by the formula (2-1) include compounds given below (excluding those falling under the formula (2-2)):

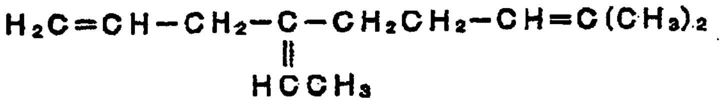

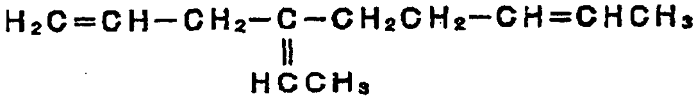

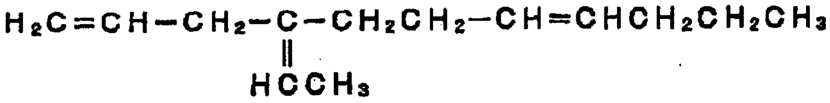

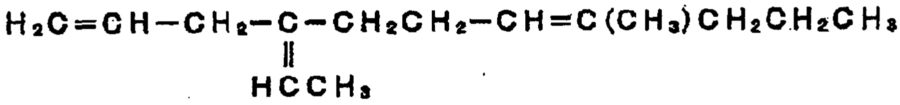

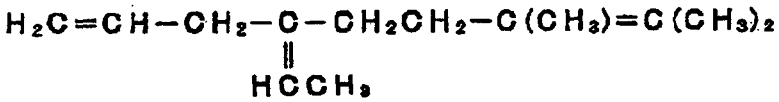

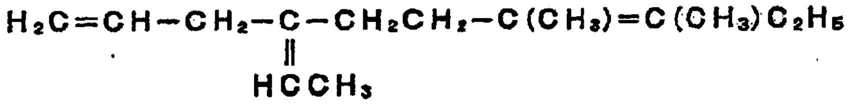

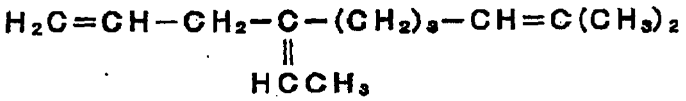

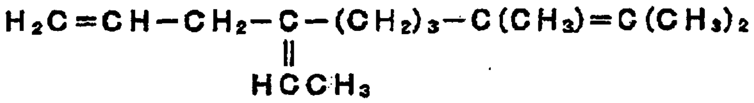

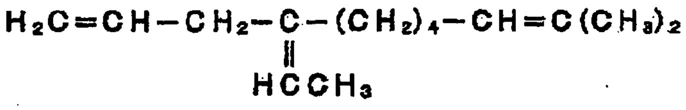

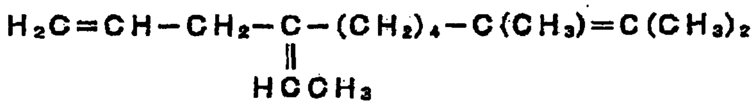

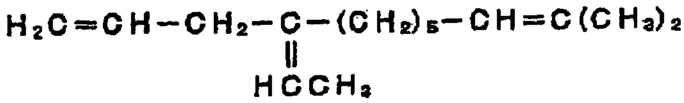

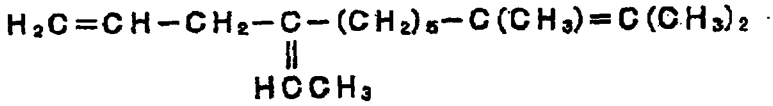

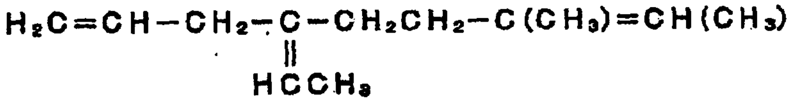

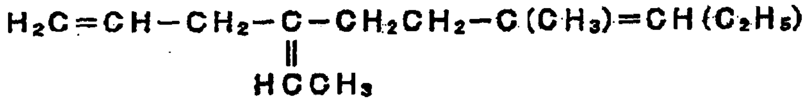

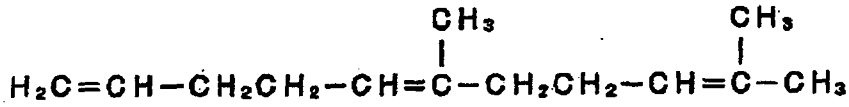

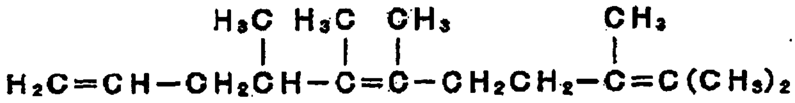

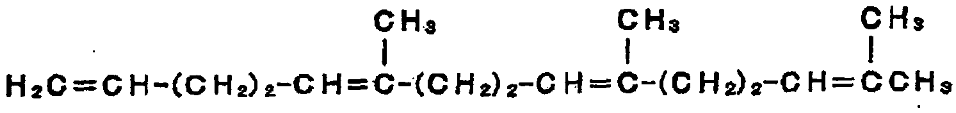

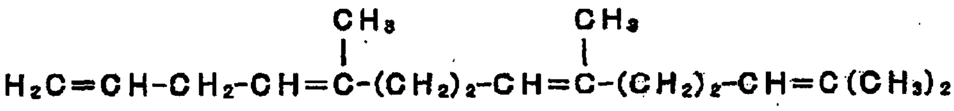

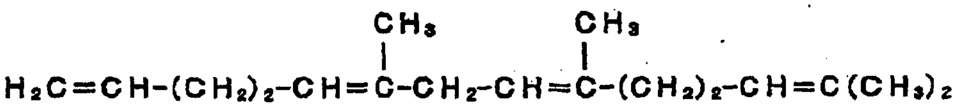

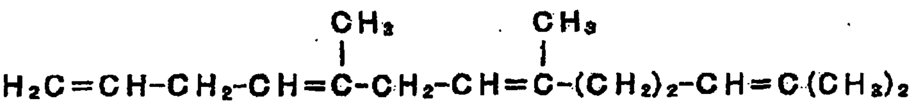

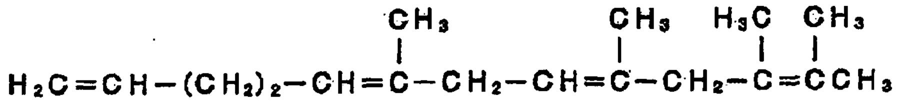

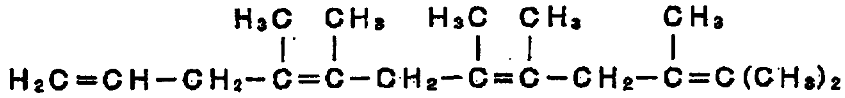

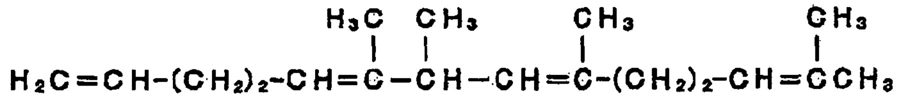

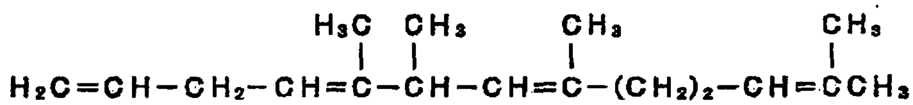

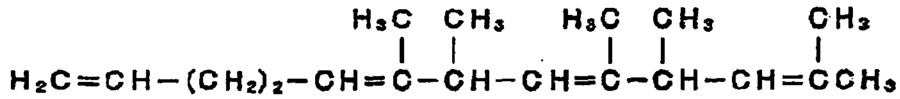

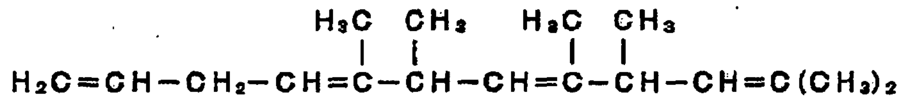

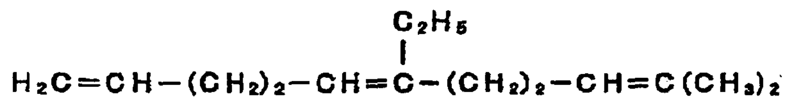

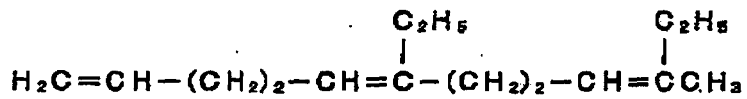

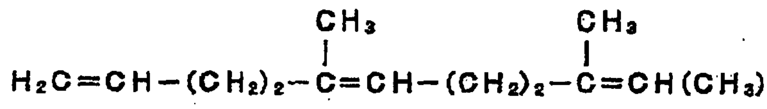

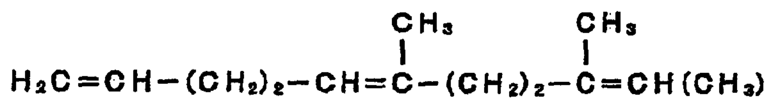

Among the above nonconjugated trienes and tetraenes, the first given 4-ethylidene-8-methyl-1,7-nonadiene is particularly preferable.

Examples of the nonconjugated trienes (A2b-2) represented by the formula (2-2) include compounds given below:

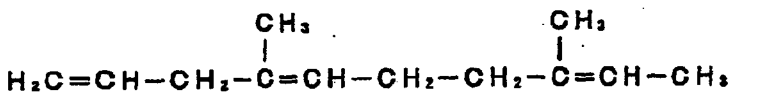

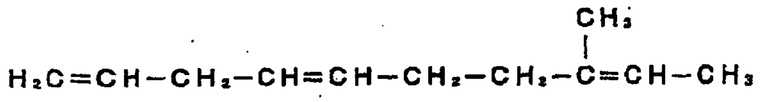

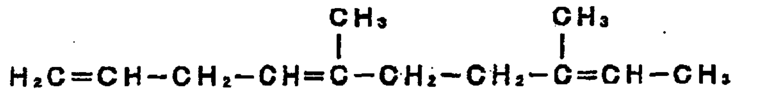

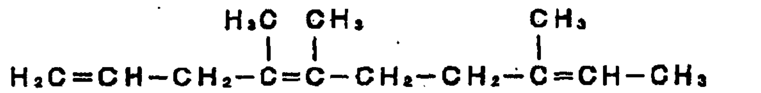

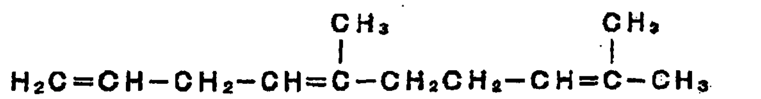

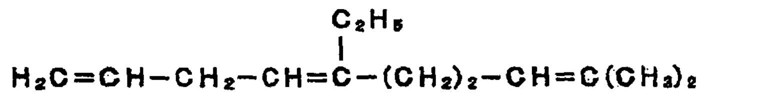

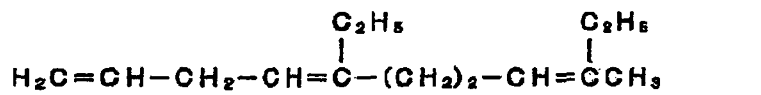

Among the above nonconjugated trienes (A2b-2), the first given 4,8-dimethyl-1,4,8-decatriene is preferred. The nonconjugated polyenes represented by the formulae (2-1) and (2-2) take usually geometrical isomeric structures (trans- and cis-isomers). The nonconjugated polyene (A2b) to be used as a monomer in the present invention may be a mixture of the trans- and cis-isomers or composed solely of either one of the isomers.

(Component (C7))

The component (C7) used in the present invention is an α-olefin/nonconjugated diene copolymer, and preferably a random copolymer of ethylene, an α-olefin and a nonconjugated polyene.

The content of the nonconjugated polyene used in the synthesis of the component (C7) is 0.1 to 30 mol%, preferably 0.5 to 10 mol%, even more preferably 0.5 to 7 mol%, based on 100 mol% of the total amount of the α-olefin and the nonconjugated polyenes [I] and [II].

Further, the glass transition temperature of the component (C7) is lower than -25°C, preferably -28°C or lower, more preferably -30°C or lower.

Further, the glass transition temperature (Tg) can be obtained from temperature-dependent measurements of tan δ in accordance with a viscoelasticity test. In the present invention, the temperature dependency of the loss tangent tan δ (vibration damping index) is determined, using a polymer sheet of 2 mm thickness, on a viscoelasticity tester (viscoelasticity tester manufactured by Rheometrics Inc.; Model RDS-2) under conditions of a measuring temperature of -70 to 30°C, a frequency of 10 Hz, a strain ratio of 0.5% and a temperature elevation rate of 4°C/min, wherein the temperature at which the value of the tan δ is maximum, defined as the glass transition temperature (Tg).

The iodine value of the component (C7) is 0.5 to 60 (g/100 g), preferably 1 to 60 (g/100 g), even more preferably 5 to 50 (g/100 g).

The intrinsic viscosity [η], as measured in decalin at 135°C, of the component (C7) is 0.01 to 10 dl/g, preferably 0.01 to 7 dl/g, more preferably 0.5 to 5 dl/g.

Further, the Mooney viscosity [$ML_{1+4}$ (100°C), JIS K6300] of the component (C7) is preferably 1 to 200, even more preferably 10 to 150.

In the case where the α-olefin comprises ethylene and an α-olefin having 3 or more carbon atoms, the component (C7) has a molar ratio [(a)/(b)] of the structural unit (a) derived from ethylene to the structural units (b) derived from the α-olefin (having 3 or more carbon atoms) of 35/65 to 95/5, preferably 50/50 to 90/10, even more preferably 60/40 to 85/15, particularly preferably 65/35 to 85/15.

The component (C7) can be prepared by copolymerizing the above-described α-olefin and the nonconjugated polyene in a per se known process, using a soluble vanadium compound represented by $VO(OR)_nX_{3-n}$ (wherein R is a hydrocarbon group, X is a halogen atom, and n is 0 or an integer of 1 to 3), or a vanadium compound represented by $VX_4$ (wherein X is a halogen atom), or a metallocene catalyst as described in JP-A No. 9-40586. A specific method for preparing the component (C7) is described, for example, in JP-A Nos. 08-325334 and 2000-297121.
The content of the component (C7) is 1 to 15 parts by weight, preferably 2 to 13 parts by weight, more preferably 2 to 10 parts by weight, based on 100 parts by weight of the total amount of the nonconjugated polyene copolymer (A) and the diene rubber (B).

<Component (C8) >

The component (C8) used in the present invention is a modified polymer obtained by modifying any one of the components (C1), (C2), (C3), (C6) and (C7).
The unsaturated compound having a polar group is specifically an unsaturated compound containing a hetero atom. Examples of the hetero atom include oxygen, nitrogen, sulfur and halogen.
Examples of the polar group include a C=O group (carbonyl group), a CO-O-R group (ester group), a CO-O-CO group (acid anhydride group), a COOH group (carboxylic acid group), an OH group, an epoxy group, a nitrile group, an amide group and an amino group.
Of these, an ester group, a carboxylic acid group, an OH group, an epoxy group and an acid anhydride group are preferable, and an acid anhydride group is particularly preferable.
Examples of the unsaturated compound having a polar group include an ethylenically unsaturated compound having a hydroxyl group, an ethylenically unsaturated compound having an amino group, an ethylenically unsaturated compound having an epoxy group, an unsaturated carboxylic acid or a derivative thereof, a vinyl ester compound and vinyl chloride.
Examples of the ethylenically unsaturated compound having a hydroxyl group include (meth)acrylic acid esters such as hydroxyethyl (meth)acrylate, 2-hydroxypropyl (meth)acrylate, 3-hydroxypropyl (meth)acrylate, 2-hydroxy-3-phenoxy-propyl (meth)acrylate, 3-chloro-2-hydroxy propyl (meth)acrylate, glycerol mono(meth)acrylate, pentaerythritol mono(meth)acrylate, trimethylolpropane mono(meth)acrylate, tetramethylolethane mono(meth)acrylate, butanediol mono (meth)acrylate, polyethylene glycol mono(meth)acrylate and 2-(6-hydroxyhexanoyloxy)ethyl acrylate; 10-undecene-1-ol, 1-octene-3-ol, 2-methanol norbornene, hydroxystyrene, hydroxyethyl vinyl ether, hydroxybutyl vinyl ether, N-methylol acrylamide, 2-(meth)acryloyloxyethyl acid phosphate, glycerol monoaryl ether, aryl alcohol, aryloxyethanol, 2-butene-1,4-diol and glycerol monoalcohol.
Examples of the ethylenically unsaturated compound having an amino group include vinylic monomers containing at least one of an amino group or a substituted amino group.
Examples of the ethylenically unsaturated compound having an amino group include alkyl ester derivatives of acrylic acids or methacrylic acids such as aminoethyl (meth)acrylate, propylaminoethyl (meth)acrylate, dimethylaminoethyl methacrylate, aminopropyl (meth)acrylate, phenylaminoethyl methacrylate and cyclohexylaminoethyl methacrylate;
vinylamine derivatives such as N-vinyldiethylamine and N-acetylvinylamine;
allylamine derivatives such as allylamine, methacrylamine, N-methylacrylamine, N,N-dimethylacrylamide and N,N-dimethylaminopropylacrylamide;
acrylamide derivatives such as acrylamide and N-methylacrylamide;
aminostyrenes such as p-aminostyrene;
6-aminohexylsuccinimide and 2-aminoethylsuccinimide.
The ethylenically unsaturated compound having an epoxy group employable in the invention is a monomer having at least one polymerizable unsaturated bond and at least one epoxy group in one molecule.
Examples of the ethylenically unsaturated compounds having an epoxy group include: glycidyl acrylate and glycidyl methacrylate; dicarboxylic acid mono- and alkylglycidyl esters (number of carbon atoms of the alkyl group in the case of monoglycidyl esters: 1-12), such as mono- and diglycidyl esters of maleic acid, mono- and glycidyl esters of fumaric acid, mono- and diglycidyl esters of crotonic acid, mono and diglycidyl esters of tetrahydrophthalic acid, mono- and diglycidyl esters of itaconic acid, mono- and diglycidyl esters of butenetricarboxylic acid, mono- and diglycidyl esters of citraconic acid, mono- and diglycidyl esters of endo-cis-bicyclo[2,2,1]hept-5-ene-2,3-dicarboxylic acid (nadic acid™), mono- or diglycidyl esters of endo-cis-bicyclo[2,2,1]hept-5-ene-2-methyl-2,3-dicarboxylic acid (methylnadic acid™), and mono- and diglycidyl esters of allylsuccinic acid; and alkyl glycidyl ester of p-styrenecarboxylic acid, allyl glycidyl ether, 2-methylallyl glycidyl ether, styrene-p-glycidyl ether, 3,4-epoxy-1-butene, 3,4-epoxy-3-methyl-1-butene, 3,4-epoxy-1-pentene, 3,4-epoxy-3-methyl-1-pentene, 5,6-epoxy-1-hexene and vinylcyclohexene monoxide.
Examples of the unsaturated carboxylic acid include unsaturated carboxylic acids, such as acrylic acid, methacrylic acid, maleic acid, fumaric acid, tetrahydrophthalic acid, itaconic acid, citraconic acid, crotonic acid, isocrotonic acid, norbornenedicarboxylic acid and bicyclo[2,2,1]hept-2-ene-5,6-dicarboxylic acid; and derivatives of these acids

(e.g., acid anhydrides, acid halides, amides, imides and esters).

Examples of the derivatives include malenyl chloride, malenyl imide, maleic anhydride, itaconic anhydride, citraconic anhydride, tetrahydrophthalic anhydride, bicyclo[2,2,1]hept-2-ene-5,6-diearboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2,2,1]hept-2-ene-5,6-dicarboxylate, hydroxyethyl (meth)acrylate, hydroxypropyl (meth)acrylate, glycidyl (meth)acrylate, aminoethyl methacrylate and aminopropyl methacrylate.

Of these, preferred are (meth)acrylic acid, maleic anhydride, hydroxyethyl (meth)acrylate, glycidyl methacrylate and aminopropyl methacrylate. (meth)acrylic acid, maleic anhydride, hydroxy ethyl(meth)acrylate, glycidylmethacrylate, methacrylic acid amino propyl.

Examples of the vinyl ester compounds include vinyl acetate, vinyl propionate, vinyl n-butyrate, vinyl isobutyrate, vinyl pivalate, vinyl caproate, vinyl versatate, vinyl laurate, vinyl stearate, vinyl benzoate, vinyl p-t-butylbenzoate, vinyl salicylate and vinyl cyclohexanecarboxylate.

Among the unsaturated compounds having a polar group, the ethylenically unsaturated compound having an epoxy group, an unsaturated carboxylic acid or a derivative thereof, for example (meth)acrylic acid, (meth)acrylic acid alkyl ester, maleic anhydride, glycidyl(meth)acrylate, and the like are preferable, and maleic anhydride and glycidyl(meth) acrylate are particularly preferable.

The modified polymer can be prepared by graft-modifying the components (C1), (C2), (C3), (C6) and (C7) in a per se known method, for example, a method such as melt modification using an extruder.

This graft-modification is usually carried out in the presence of a radical initiator. The radical initiator is, for example, organic peroxide or an azo compound.

The graft-modification by any of the unsaturated compounds having an polar group of the components (C1), (C2), (C3), (C6) and (C7) can be carried out using a per se known method, for example, any one of the components (C1), (C2), (C3), (C6) and (C7) is dissolved in an organic solvent, and then a polar monomer, a radical initiator, and the like are added thereto to effect the reaction. Further, the modified random copolymer can be also prepared by causing the (C1), (C2), (C3), (C6) and (C7) to react with an unsaturated compound having a polar group in the absence of any solvent using an extruder or the like.

Specifically, this can be carried out according to the description, for example, in the paragraphs [0271] through [0300] of JP-A No. 8-325334.

The modification quantity (i.e., quantity of the unsaturated compound having a polar group bonded to 100% by weight of any one of the components (C1), (C2), (C3), (C6) and (C7)) is in the range of usually 0.1 to 10% by weight, preferably 0.1 to 5% by weight.

The content of the component (C8) is 1 to 15 parts by weight, preferably 2 to 13 parts by weight, more preferably 2 to 10 parts by weight, based on 100 parts by weight of the total amount of the nonconjugated polyene copolymer (A) and the diene rubber (B).

<Component (C9) >

The component (C9) used in the present invention is a nonionic surfactant, a cationic surfactant, an anionic surfactant or an amphoteric surfactant, or a mixture of two or more thereof, which contains a hydrophilic group and an oleophilic group.

Examples of the nonionic surfactant include polyoxyethylene lauryl ether, polyoxyethylenecetyl ether, polyoxyethylene stearyl ether, polyoxyethylene oleyl ether, polyoxyethylene higher alcohol ether, polyoxyethylene octyl phenyl ether, polyoxyethylene nonyl phenyl ether, polyoxyethylene alkyl ether, polyoxyethylene myristyl ether, polyoxyethylene octyl dodecyl ether, polyoxyethylene alkylene alkyl ether, polyoxyethylene distyrenylated phenyl ether, polyoxyethylene derivatives, polyoxyethylene polyoxypropylene glycol, polyoxyethylene sorbitan monolaurate, polyoxyethylene sorbitan monopalmitate, polyoxyethylene sorbitan monostearate, polyoxyethylene sorbitan tristearate, polyoxyethylene sorbitan monoleate, polyoxyethylene sorbitan trioleate, polyoxyethylenesorbitan tetraoleate, glycerol monostearate, glycerol monooleate, sorbitan monolaurate, sorbitan monopalmitate, sorbitan monostearate, sorbitan distearate, sorbitan tristearate, sorbitan monooleate, sorbitan trioleate, sorbitan sesquioleate, polyethylene glycol monolaurate, polyethylene glycol monostearate, polyethylene glycol distearate, polyethylene glycol monooleate, polyoxyethylene hydrogenated castor oil, polyoxyethylene alkyl amine and alkyl alkanol amide.

Examples of the cationic surfactant include coconut amine acetate, stearyl amine acetate, lauryl trimethyl ammonium chloride, stearyl trimethyl ammonium chloride, cetyltrimethyl ammonium chloride, distearyl dimethyl ammonium chloride, and alkyl benzyl dimethyl ammonium chloride.

Examples of the anionic surfactant include mixed fatty acids soda soap, semi-hydrogenated beef tallow fatty acids soda soap, a stearic acid soda soap, a semi-hydrogenated beef tallow fatty acid potash soap, an oleic acid potash soap, a castor oil potash soap, lauryl sodium sulfate, higher alcohol sodium sulfate, lauryl sulfate triethanol amine, lauryl ammonium sulfate, dodecyl benzene sodium sulfate, sodium alkylnaphthalenesulfonate, sodium dialkylsulfosuccinate,

sodium alkyldiphenyletherdisulfonate, a potassium alkyl phosphate salt, sodium polyoxyethylene lauryl ether sulfate, sodium polyoxyethylene alkyl ether sulfate, polyoxyethylene alkyl ether sulfate triethanol amine, sodium polyoxyethylene alkyl phenyl ether sulfate, sodium alkane sulfonate, and a sodium β-naphtahlene sulfate/formalin condensate,

Examples of the amphoteric surfactant include lauryl betaine, stearyl betaine, 2-alkyl-N-carboxymethyl-N-hydroxyethylimidazolium betaine, and lauryl dimethyl amine oxide.

Of these, the nonionic surfactant and the amphoteric surfactant are preferable. For the nonionic surfactant, the HLB value (see Griffin, J. soc. Cosmetic Chemists, 1,311 (1949)) is preferably in the range of 1.5 to 19.

The content of the component (C9) is 1 to 15 parts by weight, preferably 2 to 10 parts by weight, more preferably 2 to 7 parts by weight, based on 100 parts by weight of the total amount of the nonconjugated polyene copolymer (A) and the diene rubber (B).

Optional components

<Petroleum resin (D)>

The rubber composition of the present invention may contain a petroleum resin (D). Examples of the petroleum resin (D) include a cumarone/indene resin, a phenol/formaldehyde resin, a terpene/phenol resin, a polyterpene resin, a xylene/formaldehyde resin, a synthetic polyterpene resin, a petroleum-based hydrocarbon resin, a rosin derivative, an atactic/polypropylene, and a cis 1,4-polyisoprene rubber. Of these, a petroleum-based cyclic hydrocarbon resin, a phenol/formaldehyde resin, and a cumarone/indene resin are preferable.

Particularly, if the components (C1) and (C3) are used, the petroleum resin (D) is preferably blended, whereby a tire excellent in the braking performance and the fuel consumption performance can be formed, and a rubber composition excellent in the appearance, the mechanical strength and the fatigue resistance can be also obtained.

The content of the petroleum resin (D) is 1 to 30 parts by weight, preferably 1 to 20 parts by weight, more preferably 1 to 10 parts by weight, the based on 100 parts by weight of the total amount of the nonconjugated polyene copolymer (A) and the diene rubber (B).

(Vulcanizing agent)

The rubber composition obtained by the process according to the present invention is a rubber composition capable of being vulcanized. While it may be used as a non-vulcanized product, more excellent features may be revealed by using it as a vulcanized product. The vulcanization may be carried out by a method of heating with a vulcanizing agent or by a method of irradiation of electron beam without using the vulcanizing agent.

When the rubber composition is vulcanized by heating it, compounds constituting a vulcanizing system such as a vulcanizing agent, a vulcanization accelerator and a vulcanization aid, may be admixed to the rubber composition. As the vulcanizing agent, for example, sulfur, sulfur compounds and organic peroxides may be used.

The morphological state of sulfur is not particularly limited, but, for example, powdery sulfur, precipitated sulfur, colloidal sulfur, surface-treated sulfur and insoluble sulfur may be employed. Examples of the sulfur compounds include sulfur chloride, sulfur dichloride, polymeric polysulfide, morpholine disulfide, alkylphenol disulfide, tetramethylthiuram disulfide and selenium dimethyldithiocarbamate.

Examples of the organic peroxides include alkyl peroxides such as dicumyl peroxide, di-tert-butyl peroxide, di-tert-butylperoxy-3,3,5-trimethylcyclohexane, tert-butylcumyl peroxide, di-tert-amyl peroxide, 2,5-dimethyl-2,5-di(tert-butylperoxy)hexyne-3,2,5-dimethyl-2,5-di(benzoylperoxy)hexane, 2,5-dimethyl-2,5-di(tert-butylperoxy)hexane, α,α'-bis (tert-butylperoxy-m-isopropyl)benzene and tert-butyl hydroperoxide;

peroxyesters such as tert-butyl peroxyacetate, tert-butyl peroxyisobutyrate, tert-butyl peroxypivalate, tert-butyl peroxymaleate, tert-butyl peroxyneodecanoate, tert-butyl peroxybenzoate and di-tert-butyl peroxyphthalate; and

ketone peroxides such as dicyclohexanone peroxide. These may be used alone or in a combination two or more thereof.

Of these, organic peroxides having one minute half-value period temperatures in the range of 130 to 200°C are preferred, for example, dicumyl peroxide, di-tert-butyl peroxide, di-tert-butylperoxy-3,3,5-trimethylcyclohexane, tert-butylcumyl peroxide, di-tert-amyl peroxide and tert-butyl hydroperoxide are preferable.

Among the above various vulcanizing agents, sulfur and sulfur compounds are preferred, particularly preferably sulfur, since a rubber composition having excellent properties can be obtained by the use thereof.

In the case that the vulcanizing agent is sulfur or sulfur compounds, it may be used in an amount of 0.1 to 10 parts by weight, preferably 0.5 to 5 parts by weight, based on 100 parts by weight of the total amount of the nonconjugated polyene copolymer (A) and the diene rubber (B). In the case the vulcanizing agent is an organic peroxide, it may be used in an amount of 0.05 to 15 parts by weight, preferably 0.15 to 5 parts by weight, based on 100 parts by weight of the total amount of the nonconjugated polyene copolymer (A) and the diene rubber (B).

When sulfur or a sulfur compound is used as the vulcanizing agent, it is preferable to use in combination with

a vulcanizing accelerator.

Examples of the vulcanizing accelerator include sulfenamide compounds such as N-cyclohexyl-2-benzothiazole sulfenamide (CBS), N-oxydiethylene-2-benzothiazole sulfenamide and N,N-diisopropyl-2-benzothiazole sulfenamide;
thiazole compounds such as 2-mercaptobenzothiazole (MBT), 2-(2,4-dinitrophenyl)mercaptobenzothiazole, 2-(2,6-diethyl-4-morpholinothio)benzothiazole, 2-(4'-morpholinodithio)benzothiazole and dibenzothiazyl disulfide;
guanidine compounds such as diphenylguanidine, triphenylguanidine, diorthonitrile guanidine, orthonitrile biguanide and diphenylguanidine phthalate;
aldehyde-amine or aldehyde-ammonia compounds, such as acetaldehyde-aniline reaction products, butylaldehyde-aniline condensates, hexamethylenetetramine and acetaldehyde ammonia;
imidazoline compounds such as 2-mercaptoimidazoline;
thiourea compounds such as thiocarbanilide, diethylthiourea, dibutylthiourea, trimethylthiourea and di-o-tolylthiourea;
thiuram compounds such as tetramethylthiuram monosulfide, tetramethylthiuram disulfide (TMTD), tetraethylthiuram disulfide, tetrabutylthiuram disulfide, pentamethylenethiuram tetrasulfide and dipentamethylenethiuram tetrasulfide (DPTT);
dithioic acid salt compounds such as zinc dimethyldithiocarbamate, zinc diethyldithiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate and tellurium dimethyldithiocarbamate;
xanthates such as zinc dibutylxanthogenate; and
zinc white.

The vulcanizing accelerator may be used in an amount of 0.1 to 20 parts by weight, preferably 0.2 to 10 parts by weight, based on 100 parts by weight of the total amount of the nonconjugated polyene copolymer (A) and the diene rubber (B).

In the case of using an organic peroxide as the vulcanizing agent, it is preferable to use in combination with a vulcanization aid in an amount of 0.5 to 2 moles, based on one mole of the organic peroxide, preferably in an amount nearly equimolar thereto. Examples of the vulcanization aid include, in addition to sulfur and a quinone dioxime compound such as p-quinone dioxime, a polyfunctional monomer, for example, a (meth)acrylate compound such as trimethylol propane triacrylate and polyethylene glycol dimethacrylate; an allyl compound such as diallyl phthalate and triallyl cyanurate; a maleimide compound such as m-phenylene-bis-maleimide; and divinylbenzene.

(Reinforcing agent)

The rubber composition produced by the process according to the present invention may contain additives such as a reinforcing agent. Examples of the reinforcing agent include carbon black such as SRF, GPF, FEF, MAF, HAF, ISAF, SAF, FT and MT; surface-treated carbon black, prepared by subjecting these carbon blacks to surface treatment using a silane coupling agent, etc.; and inorganic fillers such as silica, activated calcium carbonate, light calcium carbonate, heavy calcium carbonate, ground talc, talc, ground silicate and clay.

The amount of the reinforcing agent to be compounded may be 300 parts by weight or less, preferably 10 to 300 parts by weight, more preferably 10 to 200 parts by weight, based on 100 parts by weight of the total amount of the nonconjugated polyene copolymer (A) and the diene rubber (B).

When the rubber composition contains such an amount of reinforcing agent, a vulcanized rubber exhibiting improved mechanical properties such as tensile strength, tear strength and abrasion resistance, can be obtained. It is possible to increase the hardness without deteriorating other material properties of the vulcanized rubber and to attain reduction of costs.

(Softener)

As the softener, those which have conventionally been incorporated in rubbers may widely be used. Examples of the softener include petroleum softeners such as paraffinic process oils, naphthenic process oils and aromatic process oils;
synthetic oil-based softeners;
co-oligomers of ethylene and $\alpha$-olefin;
paraffin wax;
liquid paraffin;
white oil;
petrolatum;
coal tar softeners such as coal tar and coal tar pitch;
vegetable oil softeners such as castor oil, cottonseed oil, linseed oil, rapeseed oil, coconut oil, palm oil, soybean oil, arachis oil, vegetable wax, rosin, pine oil, dipentene, pine tar and tall oil;

factice such as brown factice, white factice and amber factice;
waxes such as beeswax, carnauba wax and lanolin;
fatty acids and fatty acid salts, such as ricinolic acid, palmitic acid, myristic acid, barium stearate, calcium stearate, magnesium stearate, zinc stearate and zinc laurate;
ester plasticizers such as dioctyl phthalate, dioctyl adipate and dioctyl sebacate;
cumarone-indene resins;
phenol-terpene based resins such as phenol/formaldehyde resins, terpene-phenol resins and polyterpene resins; and
petroleum hydrocarbon resins such as synthetic polyterpene resins, aromatic hydrocarbon resins, aliphatic hydrocarbon resins, alicyclic hydrocarbon resins, aliphatic-alicyclic petroleum resins, aliphatic-aromatic petroleum resins, hydrogenated modified alicyclic hydrocarbon resins, hydrogenated hydrocarbon resins, liquid polybutene, liquid polybutadine and atactic polypropylene. Of these, petroleum softeners are preferred, and aromatic process oils are more preferable.

Further, in the case using the petroleum resin (D), those which correspond to the petroleum resin (D) as a softener can be selected, or otherwise those other than the petroleum resin (D) can be selected.

The amount of the content of the softener (D) is preferably 200 parts by weight or less, preferably 10 to 200 parts by weight, more preferably 10 to 150 parts by weight, based on 100 parts by weight of the total amount of the nonconjugated polyene copolymer (A) and the diene rubber (B).

The rubber composition produced by the process according to the present invention may contain, in addition to the components mentioned above, as various agents, for example, a compound constituting a foaming agent system such as a foaming agent and a foaming aid, an antioxidant (stabilizer), a processing aid, a plasticizer, a colorant and other rubber compounding agents. The amount of these constituents may adequately be chosen for their sorts and amounts to be compounded. The types and formulating amounts of these components may be suitably selected depending on uses.

(Foaming agent)

The rubber composition produced by the process according to the present invention, when containing compounds constituting a foaming agent system such as a foaming agent and a foaming aid, may be processed by foaming molding. As the foaming agent, those that are generally used for foaming molding of a rubber may be widely used.

Examples of the foaming agent include inorganic foaming agents such as sodium bicarbonate, sodium carbonate, ammonium bicarbonate, ammonium carbonate and ammonium nitrite;
nitroso compounds such as N,N'-dimethyl-N,N'-dinitrosoterephthalamide and N,N'-dinitrosopentamethylenetetramine;
azo compounds such as azodicarbonamide, azobisisobutyronitrile, azocyclohexylnitrile, azodiaminobenzene and barium azodicaboxylate;
sulfonylhydrazide compounds such as benzenesulfonylhydrazide, toluenesulfonylhydrazide, p,p'-oxybis(benzenesulfonylhydrazide) and diphenylsulfone-3,3'-disulfonylhydrazide; and
azides such as calcium azide, 4,4-diphenyldisulfonyl azide and p-toluenesulfonyl azide. Of these, nitroso compounds, azo compounds and azides are preferred.
The foaming agent may be used in an amount of 0.5 to 30 parts by weight, preferably 1 to 20 parts by weight, based on 100 parts by weight of the total amount of the nonconjugated polyene copolymer (A) and the diene rubber (B). Using a rubber composition containing such an amount of the foaming agent, a foamed product having an apparent specific gravity of 0.03 to 0.8 g/cm$^3$ can be produced.

Further, a foaming aid may be used together with the foaming agent. The combined use of the foaming agent and the foaming aid may advantageously reduce the decomposition temperature of the foaming agent, promote the decomposition and uniform foams. The foaming aids include organic acids such as salicylic acid, phthalic acid, stearic acid and oxalic acid; urea and derivatives thereof.

The foaming aid may be used in an amount of 0.01 to 10 parts by weight, preferably 0.1 to 5 parts by weight, based on 100 parts by weight of the total amount of the nonconjugated polyene copolymer (A) and the diene rubber (B).

(Antioxidant)

It is preferable that the rubber composition obtained by the process according to the present invention contains an antioxidant, since the service life of the material can be extended thereby. Examples of the antioxidant include aromatic secondary amine stabilizers such as phenylnaphthylamine, 4,4'-($\alpha$,$\alpha$'-dimethylbenzyl)diphenylamine and N,N'-di-2-naphthyl-p-phenylenediamine;
phenol stabilizers such as 2,6-di-tert-butyl-4-methylphenol and tetrakis-[methylene-3-(3',5'-di-tert-butyl-4'-hydroxyphenyl)propionate]methane;
thioether stabilizers such as bis[2-methyl-4-(3-n-alkylthiopropionyloxy)-5-tert-butylphenyl]sulfide;
benzimidazole stabilizers such as 2-mercaptobenzimidazole;

dithiocarbamate stabilizers such as nickel dibutyldithiocarbamate; and
quinoline stabilizers such as polymerized products of 2,2,4-trimethyl-1,2-dihydroquinoline. These antioxidants may be used alone or in a combination of two or more.
The antioxidant may be used in an amount of 5 parts by weight or less, preferably 3 parts by weight or less, based on 100 parts by weight of the total amount of the nonconjugated polyene copolymer (A) and the diene rubber (B).

(Processing aid)

As the processing aid, those generally used for rubbers may be widely used. Examples of the processing aid include acids such as ricinoleic acid, stearic acid, palmitic acid and lauric acid; salts of these higher fatty acids such as barium stearate, zinc stearate and calcium stearate; or esters of these higher fatty acids.
The processing aid may be used in an amount of 10 parts by weight or less, preferably 5 parts by weight or less, based on 100 parts by weight of the total amount of the nonconjugated polyene copolymer (A) and the diene rubber (B).

<Process for producing rubber composition>

The rubber composition according to the present invention may be prepared by a preparation technique generally used for preparing rubber blends from the nonconjugated polyene copolymer (A), the diene rubber (B), and optionally the above other component(s). For example, the rubber composition may be prepared by kneading the nonconjugated polyene copolymer (A), the diene rubber (B), and optionally the above other component(s) to be blended on an internal mixer such as Banbury mixer, a kneader or Intermix, at a temperature of 80 to 170°C for 3 to 10 minutes; admixing thereto a vulcanizing agent and, if necessary, a vulcanizing accelerator, a vulcanization aid, a foaming agent and the like to knead the resulting mixture on a roll such as open roll, or on a kneader at a roll temperature of 40 to 80°C for 5 to 30 minutes; and taking out the kneaded mass in portions. In this manner, the rubber composition (rubber blend) is usually obtained in the form of ribbon or sheet. In case where a low kneading temperature is permitted in the internal mixer, the vulcanizing agent, the vulcanizing accelerator, the foaming agent and the like may be simultaneously admixed thereto.
Further, a part or all of the softener may be blended with the nonconjugated polyene copolymer (A) and/or the diene rubber (B) before the preparation of the rubber composition. For example, if the softener is oil, it may be referred to as an oil extended-copolymer where the oil is preliminarily contained therein, and as an oil extended diene rubber where the oil is preliminarily contained therein. The content of the softener is not particularly limited, but the content of the softener is preferably 100 parts by weight or less based on 100 parts by weight of the nonconjugated polyene copolymer (A), and 0 to 100 parts by weight or less based on 100 parts by weight of the diene rubber (B).
The vulcanized product (vulcanized rubber) of the rubber composition obtained by the process according to the present invention may be usually obtained by subjecting the unvulcanized rubber composition described above to a preliminary forming by various forming techniques using forming apparatuses such as an extrusion molding machine, a calendar roll, a press machine, an injection molding machine and a transfer molding machine, into a desired form and effecting the vulcanization of the resulting formed product, simultaneously with this forming or after the formed product has been transferred to a vulcanization vessel, by heating it or irradiating it by an electron beam. In the case of the foamed product, the unvulcanized rubber blend containing a foaming agent is subjected to vulcanization, as described above, wherein foaming of the formed product is simultaneously attained with the vulcanization so as to obtain a foamed product.
In the case of vulcanizing the rubber composition by heating, it is preferable to heat the formed product in a heating vessel, in a heating mode by hot air, glass beads fluidized bed, ultrahigh frequency electromagnetic wave (UHF), steam or hot molten-salt bath (LCM), at a temperature of 150 to 270°C for 1 to 30 minutes. In the case where the vulcanization is effected by irradiation with electron beam without incorporating the vulcanizing agent, the preliminarily formed rubber composition may be irradiated with an electron beam of energy of 0.1 to 10 MeV, preferably 0.3 to 2 MeV so as to reach an absorbed dose of 0.5 to 35 Mrad, preferably 0.5 to 10 Mrad. For effecting the molding vulcanization, a mold may or may not be used. In the case wherein no mold is used, the rubber composition is usually molded and vulcanized in a continuous manner.

[Rubber composition]

The rubber composition according to the present invention comprises the nonconjugated polyene copolymer (A), the diene rubber (B), and the component (C).
The rubber composition according to the present invention may be widely used as starting materials of rubber articles, and can be suitably used as the rubber material for tires. Specific examples of the rubber material for tires include materials for tire tread and for tire side wall. Above all, the rubber composition according to the present invention

can be most preferably used for the material (raw material) for a tire tread, whereby a tire excellent in both of braking performance and fuel consumption performance, and weather resistance, ozone resistance, and particularly mechanical property and fatigue resistance can be obtained, in which the characteristic properties of the rubber composition according to the present invention are most effectively revealed therefore. Further, tires having excellent abrasion resistance can be obtained.

As described above, the rubber composition according to the present invention may comprise only the nonconjugated polyene copolymer (A), the diene rubber (B), and the component (C), and optionally the petroleum resin (D), or may further comprise other rubber(s), other resin(s), a vulcanizing agent, a vulcanization aid, a vulcanization accelerator, a filler and other components, for example, the above-mentioned additives.

The total content of the nonconjugated polyene copolymer (A) and the diene rubber (B) in the rubber composition according to the present invention is 3% by weight or more, preferably 5% by weight or more, and the upper limit thereof is not particularly limited, but it is preferably 90% by weight or less. That is, the total content of the component (A), (B) and (C), and optionally the petroleum resin (D) to be added is preferably 3.03 to 100% by weight based on the total amount of the composition.

The rubber composition according to the present invention is excellent in rubber elasticity, weather resistance and ozone resistance, and in particular mechanical property and fatigue resistance. Further, the rubber composition is also excellent in abrasion resistance. Therefore, by applying the rubber composition of the present invention to tires, a tire which is excellent in both of braking performance and fuel consumption performance, and is also excellent in rubber elasticity, weather resistance and ozone resistance, in particular mechanical property and fatigue resistance can be obtained. Furthermore, a tire which is also excellent in abrasion resistance can be obtained.

[Rubber material for tires]

The rubber material for tires according to the present invention is characterized in that it comprises the rubber composition according to the present invention given above.

The rubber material for tires according to the present invention is excellent in both of braking performance and fuel consumption performance, and is also excellent in rubber elasticity, weather resistance and ozone resistance, in particularly mechanical property and fatigue resistance. Furthermore, the rubber material for tires according to the present invention is also excellent in abrasion resistance. Therefore, by applying the rubber material for tires according to the present invention to tires, a tire which is excellent in both of braking performance and fuel consumption performance, and is also excellent in rubber elasticity, weather resistance and ozone resistance, in particularly mechanical property and fatigue resistance can be obtained. Furthermore, a tire which is also excellent in abrasion resistance can be obtained.

[Tire tread]

The tire tread according to the present invention is produced from the above rubber material for tires according to the present invention.

By applying the tire tread produced from the rubber material for tires according to the present invention under vulcanization to tires, a tire which is excellent in both of braking performance and fuel consumption performance, and is also excellent in rubber elasticity, weather resistance and ozone resistance, in particularly mechanical property and fatigue resistance can be obtained. Furthermore, a tire which is also excellent in abrasion resistance can be obtained.

[Tire]

The tire according to the present invention is provided with the above-described tire tread according to the present invention. The tire according to the present invention is excellent in both of braking performance and fuel consumption performance, and is also excellent in rubber elasticity, weather resistance and ozone resistance, in particularly mechanical property and fatigue resistance. Furthermore, the tire is also excellent in abrasion resistance.

EXAMPLES

The present invention will be described by way of Examples, but it is not intended to limit the present invention thereto.

<Preparation of test sample>

(Synthesis of nonconjugated polyene copolymer (A))

The composition (A), the Mooney viscosity, the glass transition temperature (Tg) of the nonconjugated polyene copolymer were determined by the following method.

[1] Composition of nonconjugated polyene copolymer (A)
The composition of the nonconjugated polyene copolymer (A) was determined by $^1$H-NMR method.
[2] ML viscosity test
For the ML viscosity, the Mooney viscosity [$ML_{1+4}$ (100°C)] was measured at 100°C using a Mooney viscometer (Type SMV-201) manufactured by Shimadzu Corporation according to JIS K6300.
[3] Glass transition temperature (Tg)
The temperature dependency of the loss tangent tan δ (vibration damping index) is determined, using a polymer sheet of 2 mm thickness, on a viscoelasticity tester (Model RDS-2, manufactured by Rheometrics Inc.) under conditions of a measuring temperature of -70 to 30°C, a frequency of 10 Hz, a strain ratio of 0.5% and a temperature elevation rate of 4°C/min, wherein the temperature, at which the value of the tan δ was maximum, was defined as the glass transition temperature (Tg).

[Synthesis Example 1]

The synthesis of the nonconjugated polyene copolymer (A) was carried out in a continuous process using a reactor equipped with a stirrer made of a stainless steel (SUS) and having a capacity of 300 liters under raw material supply conditions shown in the following Table 1, while maintaining the temperature at 40°C and keep the solution level at 100 L. The polymerized solution after polymerization was subjected to standard decalcification and then to steam stripping to obtain a polymer (hereinafter also referred as to a "copolymer 1 (EPT)").
Dichloroethoxyvanadium oxide was used as a main catalyst and ethylaluminum sesquichloride was used as a cocatalyst.

[Table 1]

| Hexane | Ethylene | Propylene | ENB | Hydrogen | Main catalyst | Co-catalyst |
|---|---|---|---|---|---|---|
| kg/h | kg/h | kg/h | kg/h | Nl/h | mmol/h | mmol/h |
| 44.6 | 1.2 | 10.6 | 1.11 | 7 | 9 | 63 |

The copolymer 1 (EPT) had a composition containing 60.9 mol% of the structural units derived from ethylene, 30.1 mol% of the structural units derived from propylene and 9.0 mol% of the structural units derived from ENB (5-ethylidene-2-norbornene); a Mooney viscosity [$ML_{1+4}$ (100°C), JIS K6300] of 55 and a glass transition temperature (Tg) of -5°C. The yield of the copolymer 1 (EPT) was 0.71 kg per hour.
The composition, the physical properties, and the like of the obtained nonconjugated polyene copolymer are shown in the following Table 3.

[Synthesis Example 2]

The nonconjugated polyene copolymer (A) (hereinafter also referred as to a "copolymer 2 (EBT)") was synthesized in the same manner as in Synthesis Example 1 except that the raw material supply conditions are changed are changed as shown in Table 2, and the reaction temperature was changed to 25°c. The yield of the copolymer 2 (EBT) was 0.71 kg per hour.

[Table 2]

| Hexane | Ethylene | 1-Butene | ENB | Hydrogen | Main catalyst | Co-catalyst |
|---|---|---|---|---|---|---|
| kg/h | kg/h | kg/h | kg/h | Nl/h | mmol/h | mmol/h |
| 27.6 | 1.3 | 25.5 | 3.65 | 0 | 17 | 119 |

[Table 3]

| | Synthesis Example 1 Copolymer 1 (EPT) | Synthesis Example 2 Copolymer 2 (EBT) |
|---|---|---|
| Ethylene (mol%) | 60.9 | 75.8 |
| Propylene (mol%) | 30.1 | - |
| 1-Butene (mol%) | - | 14.4 |
| ENB (mol%) | 9.0 | 9.7 |
| $ML_{1+4}$ (100°C) | 55 | 59 |
| Tg (°C) | -5 | -1 |

(Preparation of copolymer composition)

[Example 1]

The component (A) (copolymer 1 (EPT)), the component (B) (SBR, BR), the component (C) (NUCREL N1110H), silica and the coupling agent MB were mixed for 2 minutes using a 1.7-liter closed Banbury mixer, and then carbon black, the aromatic oil, zinc white and stearic acid were added thereto and mixed for 2 minutes to prepare a master batch. The master batch, a vulcanization accelerator and sulfur were kneaded with a 6-inch open roll having the front/rear roll surface temperature of 50°C to prepare the rubber composition. This rubber composition was press vulcanized in a mold of 15 cm × 15 cm × 0.2 cm at 160°C for 20 minutes to prepare a desired test sample. The physical properties, formulating amount, trade name, and the like of each component are as shown in Tables 4 to 6.

[Examples 2 to 31, and Comparative Examples 1 and 2]

The desired test samples were prepared in the same manner as in Example 1 except that the type and formulating amount of each component are changed as shown in Tables 4 to 25, respectively.

<Evaluation method>

The evaluation method of the test sample is as follows.

[1] ML viscosity test
For the ML viscosity, the Mooney viscosity [$ML_{1+4}$ (100°C)] was measured at 100°C using a SMV-201-type Mooney viscometer manufactured by Shimadzu Corporation according to JIS K6300.
[2] Tensile Test
Dumbbell-shaped No. 3 test pieces described in JIS K 6251 (2001) were punched from the vulcanized rubber sheets and the tensile test was performed using the test pieces under conditions of a measuring temperature of 25°C and a tensile speed of 500 mm/min. according to the procedure prescribed in JIS K 6251 (2001). 100% modulus ($M_{100}$), 200% modulus ($M_{200}$), 300% modulus ($M_{300}$), tensile stress at break ($T_B$), and tensile elongation at break ($E_B$) were measured.
[3] Harness test
The hardness test was conducted according to JIS K6253 (2001) and the spring hardness $H_A$ (Shore A hardness) was measured.
[4] Dynamic tensile fatigue test
Dumbbell-shaped No. 1 test pieces described in JIS K 6251 were punched from the vulcanized rubber sheet and the test pieces had dents of 2 mm formed at the center of the longitudinal direction. The five test pieces thus obtained were subjected to extension fatigue under conditions of an extension rate of 40%, a preset temperature of 23°C and a rotation speed of 300 times/min using a constant elongation and constant load fatigue tester (Model FT-3121, manufactured by Ueshima Seisakusho Co., Ltd.). An average value of the times at which the dumbbells were broken, and an average value of stress at break were determined.
[5] Ozone resistance test
The vulcanized rubber sheets having a thickness of 2 mm were subjected to dynamic ozone resistance test under conditions of an ozone concentration of 50 pphm, a measuring temperature of 40°C and an elongation rate (dynamic

elongation) 0 → 25% and a frequency of 1 Hz, in accordance with JIS K6259 (2001) and generation of crack was observed after 72 hours from the initiation of the test to evaluate. Each Example was twice evaluated. Generation of crack was observed according to the following criterion for (i) the number of cracks, (ii) the size and depth of crack and the combination of (i) and (ii) was recorded. Further, "NC" in Table indicates that there were no cracks.

(i) Number of cracks
A: a few cracks, B: many cracks, C: too many cracks
(ii) Size and depth of crack

1: Not visible by the naked eye but confirmed by magnifier of 10 magnifications
2: Visible by the naked eye
3: Deep and relatively large (less than 1 mm)
4: Deep and large (1 mm or more to less than 3 mm)
5: 3 mm or more, or likely to be cut

[6] Dynamic viscoelasticity test
The temperature dependency of the loss tangent tan δ (vibration damping index) was determined, using a vulcanized rubber sheet of 2 mm thickness, on a viscoelasticity tester (Model RDS-2, manufactured by Rheometrics Inc.) under conditions of a measuring temperature of -70 to 100°C, a frequency of 10 Hz, a strain ratio of 0.05% and a temperature elevation rate of 4°C/min. The tan δ (damping rate) of the rubber composition at -10°C was represented as an index of braking performance of a tire. The larger is the tan δ at -10°C, the more excellent the braking performance of the tire is. The tan δ (damping rate) of the rubber composition at 60°C was represented as an index of fuel consumption of a vehicle. The smaller is the tan δ at 60°C, the more excellent the fuel consumption of the vehicle is.
[7] Lambourn abrasion test
The amount of Lambourn abrasion was measured under conditions of a loss of 10 N and slip ratio of 50% according to JIS K 6264, and the abrasion volume of Comparative Example 1 were defined to be 100 and abrasion resistance was represented as an index. The larger the index is, the smaller the abrasion volume and the better the abrasion resistance.

[Comparative Examples 1 and 2 and Examples 1 to 6]

Comparative Example 2 where the component (A) was compounded, exhibited improved dynamic ozone resistance, braking performance (tan δ at -10°C) and fuel consumption performance (tan δ at 60°C), but exhibited reduced $T_B$, $E_B$ and fatigue resistance, as compared to Comparative Example 1.
Examples 1 to 5 where the component (C1) was compounded, exhibited improved $T_B$, $E_B$ and fatigue resistance as compared to Comparative Example 2, and thus all the performances required for the tire could be improved with good balance (see Tables 4 to 6).
Further, Example 6 where the copolymer 2 (EBT) was used as the component (A), exhibited further improved fatigue resistance as compared to the case of using the copolymer 1 (EPT) (see Tables 5, 7 and 8).

[Table 4]

| Blend (i) of Component (C1) <Blending> | | | | | | | |
|---|---|---|---|---|---|---|---|
| | Comp. Ex. 1 | Comp. Ex. 2 | Ex. 1 | Ex. 2 | Ex. 3 | Ex. 4 | Ex. 5 |
| <Formulation> [Parts by weight] | | | | | | | |
| Component (A)<br>Copolymer 1 (EPT) | | 20 | 20 | 20 | 20 | 20 | 20 |
| Component (B)<br>SBR *1<br>BR *2 | 103.125<br>25 | 82.5<br>20 | 82.5<br>20 | 82.5<br>20 | 82.5<br>20 | 82.5<br>20 | 82.5<br>20 |
| Component (C1)<br>NUCREL N1110H<br>NUCREL N1560 | | | 7 | 7 | | | |

(continued)

| | | | | | | | |
|---|---|---|---|---|---|---|---|
| Component (C1)<br>NUCREL N2030H<br>NUCREL N2060<br>NUCREL AN4213C | | | | | 7 | 7 | 7 |
| Zinc white *3<br>Stearic acid<br>Aromatic process oil *4<br>Wet silica *5<br>ISAF Carbon black *6<br>Coupling agent MB *7 | 3<br>1<br>16.875<br>36<br>40<br>8 | 3<br>1<br>27.5<br>36<br>40<br>8 | 3<br>1<br>27.5<br>36<br>40<br>8 | 3<br>1<br>27.5<br>36<br>40<br>8 | 3<br>1<br>27.5<br>36<br>40<br>8 | 3<br>1<br>27.5<br>36<br>40<br>8 | 3<br>1<br>27.5<br>36<br>40<br>8 |
| Vulcanization accelerator (CBS) *8<br>Vulcanization accelerator (DPG) *9<br>Sulfur | 1.7<br>2<br>1.4 | 1.7<br>2<br>1.4 | 1.7<br>2<br>1.4 | 1.7<br>2<br>1.4 | 1.7<br>2<br>1.4 | 1.7<br>2<br>1.4 | 1.7<br>2<br>1.4 |

*1: SBR (styrene/butadiene rubber) [bonded styrene=23.5%, $ML_{1+a}$ (100°C)=49, aromatic oil 37.5 phr oil-extended product]: Nipol 1712 (ZEON Corporation)
*2: BR (butadiene rubber) [$ML_{1+4}$ (100°C)=23]: Nipol 1220 (ZEON Corporation)
*3: Zinc white: two types of zinc oxides (Hakusui Tech Co., Ltd.)
*4: Aromatic process oil: DIANA PROCESS OIL AH-24, manufactured by Idemitsu Kosan Co. Ltd.]
*5: Wet silica: NIPSIL VN3 (Nippon Silica Co., Ltd.)
*6: ISAF carbon black: ASAHI #80 (Asahi Carbon Co., Ltd.)
*7: Coupling agent MB: SILANOGRAN Si-69/GR (Seika Sangyo Co., Ltd.)
*8: Vulcanization accelerator (CBS): SANCELER CM (Sanshin Chemical Industry Co., Ltd.)
*9: Vulcanization accelerator (DPG): SANCELER D-G (Sanshin Chemical Industry Co., Ltd.)

[Table 5]

| Physical properties of Component (C1) | | | | | | |
|---|---|---|---|---|---|---|
| | Resin | Mitsui DuPont Polychemical (Registered Trade Mark) | | | | |
| | Name | N1110H | N1560 | N2030H | N2060 | AN4213C |
| <Physical properties><br>MFR (190°C)<br>Content of methacrylic acid<br>Density | <br>g/10 min<br>wt%<br>$kg/m^3$ | <br>100<br>11<br>940 | <br>60<br>15<br>940 | <br>300<br>20<br>950 | <br>60<br>20<br>949 | <br>10<br>10<br>940 |

[Table 6]

| Blend (i) of Component (C1) <Physical properties> | | | | | | | |
|---|---|---|---|---|---|---|---|
| | Comp. Ex. 1 | Comp. Ex. 2 | Ex. 1 | Ex. 2 | Ex. 3 | Ex. 4 | Ex. 5 |
| <Physical properties in ordinary state> | | | | | | | |
| $H_A$ | 62 | 64 | 68 | 69 | 68 | 67 | 67 |
| $M_{100}$[MPa] | 1.86 | 1.93 | 2.11 | 2.15 | 2.07 | 1.92 | 2.05 |
| $M_{200}$[MPa] | 5.22 | 5.23 | 4.88 | 4.97 | 4.50 | 4.22 | 4.69 |
| $M_{300}$[MPa] | 9.89 | 9.73 | 8.55 | 8.52 | 7.65 | 7.18 | 8.11 |
| $T_B$[MPa] | 18.2 | 16.8 | 19.1 | 17.6 | 17.9 | 18.0 | 19.2 |
| $E_B$[%] | 470 | 450 | 560 | 540 | 580 | 610 | 580 |
| Tensile product ($T_B \times E_B$) | 8554 | 7547 | 10696 | 9504 | 10382 | 10980 | 11136 |

(continued)

| | | | | | | | |
|---|---|---|---|---|---|---|---|
| <Fatigue resistance><br>Number of breaking [times]<br>Stress at break [N] | <br>14410<br>8.4 | <br>12940<br>5.5 | <br>13630<br>6.4 | <br>15580<br>4.9 | <br>22240<br>4.6 | <br>23350<br>3.9 | <br>14730<br>5.5 |
| <Dynamic ozone resistance><br>Generation of crack | <br>C-5/C-5 | <br>B-2/B-2 | <br>NC/NC | <br>NC/NC | <br>NC/NC | <br>NC/NC | <br>NC/NC |
| <Viscoelasticity><br>tan δ (-10°C)<br>tan δ (60°C) | <br>0.318<br>0.181 | <br>0.465<br>0.165 | <br>0.383<br>0.186 | <br>0.395<br>0.180 | <br>0.387<br>0.190 | <br>0.394<br>0.193 | <br>0.398<br>0.176 |
| <Abrasion resistance> | 100 | 85 | 100 | 101 | 105 | 107 | 102 |

[Table 7]

| Blend (ii) of Component (C1) <Blending> | | | |
|---|---|---|---|
| | Comp. Ex. 1 | Comp. Ex. 2 | Ex. 6 |
| <Formulation> [Parts by weight] | | | |
| Component (A)<br>Copolymer 1 (EPT)<br>Copolymer 2 (EBT) | | <br>20<br> | <br><br>20 |
| Component (B)<br>SBR *1<br>BR *2 | <br>103.125<br>25 | <br>82.5<br>20 | <br>82.5<br>20 |
| Component (C1)<br>NUCREL N2060 | | | <br>7 |
| Zinc white *3<br>Stearic acid<br>Aromatic process oil *4<br>Wet silica *5<br>ISAF Carbon black *6<br>Coupling agent MB *7 | 3<br>1<br>16.875<br>36<br>40<br>8 | 3<br>1<br>27.5<br>36<br>40<br>8 | 3<br>1<br>27.5<br>36<br>40<br>8 |
| Vulcanization accelerator (CBS) *8<br>Vulcanization accelerator (DPG) *9 | 1.7<br>2 | 1.7<br>2 | 1.7<br>2 |

(continued)

| | | | |
|---|---|---|---|
| Component (C1)<br>Sulfur | 1.4 | 1.4 | 1.4 |
| *1: SBR (styrene/butadiene rubber) [bonded styrene=23.5%, $ML_{1+4}$ (100°C) =49, aromatic oil 37.5 phr oil-extended product]: Nipol 1712 (ZEON Corporation)<br>*2: BR (butadiene rubber) [$ML_{1+4}$ (100°C)=23]: Nipol 1220 (ZEON Corporation)<br>*3: Zinc white: two types of zinc oxides (Hakusui Tech Co., Ltd.)<br>*4: Aromatic process oil: DIANA PROCESS OIL AH-24, manufactured by Idemitsu Kosan Co. Ltd.]<br>*5: Wet silica: NIPSIL VN3 (Nippon Silica Co., Ltd.)<br>*6: ISAF carbon black: ASAHI #80 (Asahi Carbon Co., Ltd.)<br>*7: Coupling agent MB: SILANOGRAN Si-69/GR (Seika Sangyo Co., Ltd.)<br>*8: Vulcanization accelerator (CBS): SANCELER CM (Sanshin Chemical Industry Co., Ltd.)<br>*9: Vulcanization accelerator (DPG): SANCELER D-G (Sanshin Chemical Industry Co., Ltd.) | | | |

[Table 8]

| Blend (ii) of Component (C1) <Physical properties> | | | |
|---|---|---|---|
| | Comp. Ex. 1 | Comp. Ex. 2 | Ex. 6 |
| <Physical properties in ordinary state> | | | |
| $H_A$ | 62 | 64 | 66 |
| $M_{100}$[MPa] | 1.86 | 1.93 | 2.05 |
| $M_{200}$[MPa] | 5.22 | 5.23 | 4.85 |
| $M_{300}$[MPa] | 9.89 | 9.73 | 8.40 |
| $T_B$[MPa] | 18.2 | 16.8 | 17.9 |
| $E_B$[%] | 470 | 450 | 560 |
| Tensile product ($T_B \times E_B$) | 8554 | 7547 | 10024 |
| <Fatigue resistance> | | | |
| Number of breaking [times] | 14410 | 12940 | 32030 |
| Stress at break [N] | 8.4 | 5.5 | 5.5 |
| <Dynamic ozone resistance> | | | |
| Generation of crack | C-5/C-5 | B-2/B-2 | NC/NC |
| <Viscoelasticity> | | | |
| tan δ (-10°C) | 0.318 | 0.465 | 0.394 |
| tan δ (60°C) | 0.181 | 0.165 | 0.193 |
| abrasion resistance | 100 | 85 | 108 |

[Comparative Examples 1 and 2 and Examples 7 to 10]

Examples 7 and 8 where the component (C2) was compounded, exhibited improved $T_B$, $E_B$ and fatigue resistance as compared to Comparative Example 2, and thus all the performances required for the tire could be improved with good balance.

Further, Examples where the copolymer 2 (EBT) was used as the component (A), exhibited further improved fatigue resistance as compared to the case of using the copolymer 1 (EPT) (see Tables 9 to 11).

[Table 9]

| Blend of Component (C2) <Blending> | | | | | | |
|---|---|---|---|---|---|---|
| | Comp. Ex. 1 | Comp. Ex. 2 | Ex. 7 | Ex. 8 | Ex. 9 | Ex. 10 |
| <Formulation> [Parts by weight] | | | | | | |
| Component (A) | | | | | | |
| Copolymer 1 (EPT) | | 20 | 20 | 20 | | |
| Copolymer 2 (EBT) | | | | | 20 | 20 |
| Component (B) | | | | | | |
| SBR *1 | 103.125 | 82.5 | 82.5 | 82.5 | 82.5 | 82.5 |
| BR *2 | 25 | 20 | 20 | 20 | 20 | 20 |
| Component (C2) | | | | | | |
| HYBRAR 5125 | | | 7 | | 7 | |
| HYBRAR 7125 | | | | 7 | | 7 |
| Zinc white *3 | 3 | 3 | 3 | 3 | 3 | 3 |
| Stearic acid | 1 | 1 | 1 | 1 | 1 | 1 |
| Aromatic process oil *4 | 16.875 | 27.5 | 27.5 | 27.5 | 27.5 | 27.5 |
| Wet silica *5 | 36 | 36 | 36 | 36 | 36 | 36 |
| ISAF Carbon black *6 | 40 | 40 | 40 | 40 | 40 | 40 |
| Coupling agent MB *7 | 8 | 8 | 8 | 8 | 8 | 8 |
| Vulcanization accelerator (CBS) *8 | 1.7 | 1.7 | 1.7 | 1.7 | 1.7 | 1.7 |
| Vulcanization accelerator (DPG) *9 | 2 | 2 | 2 | 2 | 2 | 2 |
| Sulfur | 1.4 | 1.4 | 1.4 | 1.4 | 1.4 | 1.4 |

*1: SBR (styrene/butadiene rubber) [bonded styrene=23.5%, $ML_{1+4}$ (100°C)=49, aromatic oil 37.5 phr oil-extended product]: Nipol 1712 (ZEON Corporation)
*2: BR (butadiene rubber) [$ML_{1+4}$ (100°C)=23]: Nipol 1220 (ZEON Corporation)
*3: Zinc white: two types of zinc oxides (Hakusui Tech Co., Ltd.)
*4: Aromatic process oil: DIANA PROCESS OIL AH-24, manufactured by Idemitsu Kosan Co. Ltd.]
*5: Wet silica: NIPSIL VN3 (Nippon Silica Co., Ltd.)
*6: ISAF carbon black: ASAHI #80 (Asahi Carbon Co., Ltd.)
*7: Coupling agent MB: SILANOGRAN Si-69/GR (Seika Sangyo Co., Ltd.)
*8: Vulcanization accelerator (CBS): SANCELER CM (Sanshin Chemical Industry Co., Ltd.)
*9: Vulcanization accelerator (DPG): SANCELER D-G (Sanshin Chemical Industry Co., Ltd.)

[Table 10]

| Physical properties of Component (C2) | | | |
|---|---|---|---|
| | Resin | HYBRAR manufactured by Kuraray Co., Ltd. | |
| | Name | 5125 | 7125 |
| <Physical properties> | | | |
| MFR (190°C) | g/10 min | 4 | 0.7 |
| Content of styrene | wt% | 20 | 20 |

[Table 11]

| Blend of Component (C2) <Physical properties> | | | | | | |
|---|---|---|---|---|---|---|
| | Comp. Ex. 1 | Comp. Ex. 2 | Ex. 7 | Ex. 8 | Ex. 9 | Ex. 10 |
| <Physical properties in ordinary state> $H_A$ | 62 | 64 | 62 | 64 | 63 | 63 |

(continued)

| Blend of Component (C2) <Physical properties> | | | | | | |
|---|---|---|---|---|---|---|
| | Comp. Ex. 1 | Comp. Ex. 2 | Ex. 7 | Ex. 8 | Ex. 9 | Ex. 10 |
| <Physical properties in ordinary state> | | | | | | |
| $M_{100}$[MPa] | 1.86 | 1.93 | 1.85 | 1.87 | 1.81 | 1.83 |
| $M_{200}$[MPa] | 5.22 | 5.23 | 4.88 | 4.86 | 4.74 | 4.73 |
| $M_{300}$[MPa] | 9.89 | 9.73 | 8.98 | 8.87 | 8.60 | 8.69 |
| $T_B$[MPa] | 18.2 | 16.8 | 18.2 | 16.9 | 17.9 | 16.4 |
| $E_B$[%] | 470 | 450 | 520 | 510 | 520 | 500 |
| Tensile product ($T_B \times E_B$) | 8554 | 7547 | 9464 | 8619 | 9308 | 8200 |
| <Fatigue resistance> | | | | | | |
| Number of breaking [times] | 14410 | 12940 | 22800 | 23510 | 34220 | 36210 |
| Stress at break [N] | 8.4 | 5.5 | 5.7 | 6.1 | 6.5 | 7.0 |
| <Dynamic ozone resistance> | | | | | | |
| Generation of crack | C-5/C-5 | B-2/B-2 | B-2/B-2 | B-2/B-2 | B-2/B-2 | B-2/B-2 |
| <Viscoelasticity> | | | | | | |
| tan δ (-10°C) | 0.318 | 0.465 | 0.435 | 0.428 | 0.421 | 0.418 |
| tan δ (60°C) | 0.181 | 0.165 | 0.162 | 0.170 | 0.170 | 0.174 |
| <Abrasion resistance> | 100 | 85 | 100 | 103 | 101 | 102 |

[Comparative Examples 1 and 2 and Examples 11 to 14]

Examples 11 and 12 where the component (C3) was compounded, exhibited improved $T_B$, $E_B$ and fatigue resistance as compared to Comparative Example 2, and thus all the performances required for the tire could be improved with good balance.

Further, Examples where the copolymer 2 (EBT) was used as the component (A), exhibited further improved fatigue resistance as compared to the case of using the copolymer 1 (EPT) (Examples 13 and 14) (see Tables 12 to 14).

[Table 12]

| Blend of Component (C3) <Blending> | | | | | | |
|---|---|---|---|---|---|---|
| | Comp. Ex. 1 | Comp. Ex. 2 | Ex. 11 | Ex. 12 | Ex. 13 | Ex. 14 |
| <Formulation> [Parts by weight] | | | | | | |
| Component (A) | | | | | | |
| Copolymer 1 (EPT) | | 20 | 20 | 20 | | |
| Copolymer 2 (EBT) | | | | | 20 | 20 |
| Component (B) | | | | | | |
| SBR *1 | 103.125 | 82.5 | 82.5 | 82.5 | 82.5 | 82.5 |
| BR *2 | 25 | 20 | 20 | 20 | 20 | 20 |
| Component (C3) | | | | | | |
| BPR | | | 7 | | 7 | |
| EOR (Engage 8452) | | | | 7 | | 7 |
| Zinc white *3 | 3 | 3 | 3 | 3 | 3 | 3 |
| Stearic acid | 1 | 1 | 1 | 1 | 1 | 1 |
| Aromatic process oil *4 | 16.875 | 27.5 | 27.5 | 27.5 | 27.5 | 27.5 |
| Wet silica *5 | 36 | 36 | 36 | 36 | 36 | 36 |
| ISAF Carbon black *6 | 40 | 40 | 40 | 40 | 40 | 40 |

(continued)

| Component (C3) | | | | | | |
|---|---|---|---|---|---|---|
| Coupling agent MB *7 | 8 | 8 | 8 | 8 | 8 | 8 |
| Vulcanization accelerator (CBS) *8 | 1.7 | 1.7 | 1.7 | 1.7 | 1.7 | 1.7 |
| Vulcanization accelerator (DPG) *9 | 2 | 2 | 2 | 2 | 2 | 2 |
| Sulfur | 1.4 | 1.4 | 1.4 | 1.4 | 1.4 | 1.4 |

*1: SBR (styrene/butadiene rubber) [bonded styrene=23.5%, $ML_{1+4}$ (100°C)=49, aromatic oil 37.5 phr oil-extended product]: Nipol 1712 (ZEON Corporation)
*2: BR (butadiene rubber) [$ML_{1+4}$ (100°C)=23]: Nipol 1220 (ZEON Corporation)
*3: Zinc white: two types of zinc oxides (Hakusui Tech Co., Ltd.)
*4: Aromatic process oil: DIANA PROCESS OIL AH-24, manufactured by Idemitsu Kosan Co. Ltd.]
*5: Wet silica: NIPSIL VN3 (Nippon Silica Co., Ltd.)
*6: ISAF carbon black: ASAHI #80 (Asahi Carbon Co., Ltd.)
*7: Coupling agent MB: SILANOGRAN Si-69/GR (Seika Sangyo Co., Ltd.)
*8: Vulcanization accelerator (CBS): SANCELER CM (Sanshin Chemical Industry Co., Ltd.)
*9: Vulcanization accelerator (DPG): SANCELER D-G (Sanshin Chemical Industry Co., Ltd.)

[Table 13]

| Physical properties of Component (C3) | | | |
|---|---|---|---|
| | Resin | BPR *1 | Engage manufactured by DDE |
| | Name | | 8452 |
| <Physical properties> | | | |
| [η] | dl/g | 2.2 | |
| MFR (190°C) | g/10 min | | 3 |
| Density | $kg/m^3$ | | 875 |
| Composition | molar ratio | Butene/propylene=86.5/13.5 | Ethylene/octene=65/35 |

*1: Prepared by the same method as in Reference Example 8 described in JP-A No. 9-302038.

[Table 14]

| Blend of Component (C3) <Physical properties> | Comp. Ex. 1 | Comp. Ex. 2 | Ex. 11 | Ex. 12 | Ex. 13 | Ex. 14 |
|---|---|---|---|---|---|---|
| <Physical properties in ordinary state> | | | | | | |
| $H_A$ | 62 | 64 | 65 | 63 | 64 | 62 |
| $M_{100}$[MPa] | 1.86 | 1.93 | 2.17 | 1.98 | 2.05 | 1.90 |
| $M_{200}$[MPa] | 5.22 | 5.23 | 5.67 | 5.30 | 5.29 | 5.10 |
| $M_{300}$[MPa] | 9.89 | 9.73 | 10.39 | 9.64 | 9.63 | 9.32 |
| $T_B$[MPa] | 18.2 | 16.8 | 19.1 | 18.2 | 16.9 | 18.1 |
| $E_B$[%] | 470 | 450 | 490 | 500 | 480 | 500 |
| Tensile product ($T_B \times E_B$) | 8554 | 7547 | 9359 | 9100 | 8112 | 9050 |
| <Fatigue resistance> | | | | | | |
| Number of breaking [times] | 14410 | 12940 | 16290 | 14390 | 22550 | 23540 |
| Stress at break [N] | 8.4 | 5.5 | 9.0 | 8.4 | 8.3 | 8.0 |
| <Dynamic ozone resistance> | | | | | | |
| Generation of crack | C-5/C-5 | B-2/B-2 | B-2/B-2 | B-2/B-2 | B-2/B-2 | B-2/B-2 |

(continued)

| | | | | | | |
|---|---|---|---|---|---|---|
| <Viscoelasticity><br>tan δ (-10°C)<br>tan δ (60°C) | <br>0.318<br>0.181 | <br>0.465<br>0.165 | <br>0.465<br>0.162 | <br>0.472<br>0.168 | <br>0.451<br>0.162 | <br>0.459<br>0.170 |
| <Abrasion resistance> | 100 | 85 | 100 | 101 | 101 | 100 |

[Comparative Examples 1 and 2 and Examples 15 to 20]

Examples 15 and 16 where the component (C4) was compounded, Examples 17 and 18 where the component (C5) was compounded, Example 19 where the component (C6) was compounded, and Example 20 where the component (C7) was compounded, exhibited improved $T_B$, $E_B$ and fatigue resistance as compared to Comparative Example 2, and thus all the performances required for the tire could be improved with good balance (see Tables 15 to 19).

[Table 15]

| Blend of Components (C4) to (C7) <Blending> | | | | | | | | |
|---|---|---|---|---|---|---|---|---|
| | Comp. Ex. 1 | Comp. Ex. 2 | Ex. 15 | Ex. 16 | Ex. 17 | Ex. 18 | Ex. 19 | Ex. 20 |
| <Formulation> [Parts by weight]<br>Component (A)<br>Copolymer 1 (EPT) | | 20 | 20 | 20 | 20 | 20 | 20 | 20 |
| Component (B)<br>SBR *1<br>BR *2 | <br>103.125<br>25 | <br>82.5<br>20 | <br>82.5<br>20 | <br>82.5<br>20 | <br>82.5<br>20 | <br>82.5<br>20 | <br>82.5<br>20 | <br>82.5<br>20 |
| Component (C4)<br>NBR (Nipol 1042)<br>NBR (Nipol 1031) | | | 7 | <br><br>7 | | | | |
| Component (C5)<br>Olefinic thermoplastic elastmer-1<br>Olefinic thermoplastic elastmer-2 | | | | | 7 | <br><br>7 | | |
| Component (C6)<br>VNB-EPT | | | | | | | 7 | |
| Component (C7)<br>DMDT-EPT | | | | | | | | 7 |
| Zinc white *3<br>Stearic acid<br>Aromatic process oil *4<br>Wet silica *5<br>ISAF Carbon black *6<br>Coupling agent MB *7 | 3<br>1<br>16.875<br>36<br>40<br>8 | 3<br>1<br>27.5<br>36<br>40<br>8 | 3<br>1<br>27.5<br>36<br>40<br>8 | 3<br>1<br>27.5<br>36<br>40<br>8 | 3<br>1<br>27.5<br>36<br>40<br>8 | 3<br>1<br>27.5<br>36<br>40<br>8 | 3<br>1<br>27.5<br>36<br>40<br>8 | 3<br>1<br>27.5<br>36<br>40<br>8 |
| Vulcanization accelerator (CBS) *8 | 1.7 | 1.7 | 1.7 | 1.7 | 1.7 | 1.7 | 1.7 | 1.7 |

(continued)

| | | | | | | | | |
|---|---|---|---|---|---|---|---|---|
| Component (C7)<br>Vulcanization accelerator (DPG) *9<br>Sulfur | <br>2<br><br>1.4 | <br>2<br><br>1.4 | <br>2<br><br>1.4 | <br>2<br><br>1.4 | <br>2<br><br>1.4 | <br>2<br><br>1.4 | <br>2<br><br>1.4 | <br>2<br><br>1.4 |
| *1: SBR (styrene/butadiene rubber) [bonded styrene=23.5%, $ML_{1+4}$ (100°C)=49, aromatic oil 37.5 phr oil-extended product]: Nipol 1712 (ZEON Corporation)<br>*2: BR (butadiene rubber) [$ML_{1+4}$ (100°C)=23]: Nipol 1220 (ZEON Corporation)<br>*3: Zinc white: two types of zinc oxides (Hakusui Tech Co., Ltd.)<br>*4: Aromatic process oil: DIANA PROCESS OIL AH-24, manufactured by Idemitsu Kosan Co. Ltd.]<br>*5: Wet silica: NIPSIL VN3 (Nippon Silica Co., Ltd.)<br>*6: ISAF carbon black: ASAHI #80 (Asahi Carbon Co., Ltd.)<br>*7: Coupling agent MB: SILANOGRAN Si-69/GR (Seika Sangyo Co., Ltd.)<br>*8: Vulcanization accelerator (CBS): SANCELER CM (Sanshin Chemical Industry Co., Ltd.)<br>*9: Vulcanization accelerator (DPG): SANCELER D-G (Sanshin Chemical Industry Co., Ltd.) | | | | | | | | |

[Table 16]

| Physical properties of Component (C4) | | | |
|---|---|---|---|
| | Rubber | NBR *1 | |
| | Name | Nipol 1042 | Nipol 1031 |
| <Physical properties><br>Amount of acrylonitrile<br>$ML_{1+4}$ (100°C) | <br>wt% | <br>33.5<br>78 | <br>40.5<br>63 |
| *1 NBR: Nipol 1042, Nipol 1031 (ZEON Corporation) | | | |

[Table 17]

| Physical properties of Component (C5) | | |
|---|---|---|
| | Olefinic thermoplastic elastmer-1 | Olefinic thermoplastic elastmer-2 |
| <Physical properties> [Parts by weight] | | |
| A | 30 | 15 |
| B | 70 | 85 |
| C | | 10 |
| Paraffinic oil | 40 | |

(continued)

| Physical properties of Component (C5) | | |
|---|---|---|
| | Olefinic thermoplastic elastmer-1 | Olefinic thermoplastic elastmer-2 |
| <Physical properties> [Parts by weight]<br><Hardness> (JIS A) | 70 | 66 |
| A: Polyethylene resin (linear low-density polyethylene)<br>1) Density: 0.920 g/$cm^3$<br>2) MFR: 2.1 g/10 min<br>3) Ethylene/4-methyl-1-pentene: 97/3 mol%<br><br>B: Ethylene/α-olefin copolymer<br>(Ethylene/propylene/dicyclopentadiene copolymer rubber)<br>1) Ethylene content: 77 mol%<br>2) $ML_{1+4}$ (100°C) : 145<br>3) Iodine value: 12<br><br>C: Polypropylene resin (Propylene/ethylene random copolymer)<br>1) Ethylene content: 4 mol%<br>2) MFR (230°C, a load of 2.16 kg): 0.5 g/ 10 min<br>Paraffinic oil: PW-380 (Idemitsu Kosan Co., Ltd.) | | |

[Table 18]

| Physical properties of Components (C6) and (C7) | | | |
|---|---|---|---|
| | | Component (C6) VNB-EPT *5 | Component (C7) DMDT-EPT *6 |
| <Physical properties> | | | |
| (Ethylene, propylene) content | mol% | 99.55 | 97.3 |
| Ethylene/propylene ratio | (molar ratio) | 76/24 | 79/21 |
| VNB content *1 | mol% | 0.45 | |
| DMDT content *2 | mol% | | 2.7 |
| $ML_{1+4}$ (100°C): | | | 48 |
| $ML_{1+4}$ (150°C): *3 | | 55 | |
| intrinsic viscosity [η] *4 | dl/g | 3.5 | 1.9 |
| Iodine value (IV) | g/100 g | 3.6 | 40 |
| Glass transition temperature (TG) | °C | -38 | -37 |

*1 VNB: 5-vinyl-2-norbornene
*2 DMDT: 4,8-dimethyl-1,4,8-decatriene
*3 Measured at 150°Cin accordance with $ML_{1+4}$ (100°C)
*4 Intrinsic viscosity [η]: measured in decalin at 135°C
*5 Prepared in accordance with the method described in International Patent WO00/55251
*6 Prepared in accordance with the method described in JP-A No. 2000-297121

[Table 19]

| Blend of Components (C4) to (C7) <Physical properties> | | | | | | | | |
|---|---|---|---|---|---|---|---|---|
| | Comp. Ex. 1 | Comp. Ex. 2 | Ex. 15 | Ex. 16 | Ex. 17 | Ex. 18 | Ex. 19 | Ex. 20 |
| <Physical properties in ordinary state> | | | | | | | | |
| $H_A$ | 62 | 64 | 62 | 63 | 62 | 63 | 62 | 61 |
| $M_{100}$[MPa] | 1.86 | 1.93 | 1.91 | 2.03 | 1.93 | 1.90 | 1.75 | 1.92 |
| $M_{200}$[MPa] | 5.22 | 5.23 | 5.21 | 5.47 | 5.17 | 4.96 | 4.61 | 5.03 |
| $M_{300}$[MPa] | 9.89 | 9.73 | 9.60 | 9.90 | 9.50 | 9.14 | 8.57 | 9.24 |
| $T_B$[MPa] | 18.2 | 16.8 | 15.6 | 17.2 | 17.7 | 17.9 | 17.4 | 18.5 |
| $E_B$[%] | 470 | 450 | 460 | 470 | 490 | 500 | 510 | 500 |
| Tensile product ($T_B \times E_B$) | 8554 | 7547 | 7176 | 8084 | 8673 | 8950 | 8874 | 9250 |
| <Fatigue resistance> | | | | | | | | |
| Number of breaking [times] | 14410 | 12940 | 17850 | 13470 | 13940 | 25740 | 14220 | 15560 |
| Stress at break [N] | 8.4 | 5.5 | 7.1 | 8.0 | 8.3 | 7.6 | 6.7 | 7.5 |
| <Dynamic ozone resistance> Generation of crack | C-5/C-5 | B-2/B-2 | B-2/B-2 | B-2/B-2 | B-2/B-2 | B-2/B-2 | B-2/B-2 | NC/NC |
| <Viscoelasticity> | | | | | | | | |
| tan δ (-10°C) | 0.318 | 0.465 | 0.480 | 0.490 | 0.460 | 0.462 | 0.463 | 0.467 |
| tan δ (60°C) | 0.181 | 0.165 | 0.170 | 0.172 | 0.167 | 0.165 | 0.168 | 0.166 |
| <Abrasion resistance> | 100 | 85 | 100 | 101 | 105 | 105 | 103 | 102 |

[Comparative Examples 1 and 2 and Examples 21 to 23]

Examples 21 to 23 where the component (C8) was compounded exhibited improved $T_B$, $E_B$ and fatigue resistance as compared to Comparative Example 2, and thus all the performances required for the tire could be improved with good balance (see Tables 20 to 22).

[Table 20]

| Blend of Component (C8) <Blending> | | | | | |
|---|---|---|---|---|---|
| | Comp. Ex. 1 | Comp. Ex. 2 | Ex. 21 | Ex. 22 | Ex. 23 |
| <Formulation> [Parts by weight] | | | | | |
| Component (A) | | | | | |
| Copolymer 1 (EPT) | | 20 | 20 | 20 | 20 |
| Component (B) | | | | | |
| SBR *1 | 103.125 | 82.5 | 82.5 | 82.5 | 82.5 |
| BR *2 | 25 | 20 | 20 | 20 | 20 |
| Component (C8) | | | | | |
| Modified polyolefin-1 | | | 7 | | |

(continued)

| Component (C8) | | | | | |
|---|---|---|---|---|---|
| Modified polyolefin-2 | | | | 7 | |
| Modified polyolefin-3 | | | | | 7 |
| Zinc white *3 | 3 | 3 | 3 | 3 | 3 |
| Stearic acid | 1 | 1 | 1 | 1 | |
| Aromatic process oil *4 | 16.875 | 27.5 | 27.5 | 27.5 | 27.5 |
| Wet silica *5 | 36 | 36 | 36 | 36 | 36 |
| ISAF Carbon black *6 | 40 | 40 | 40 | 40 | 40 |
| Coupling agent MB *7 | 8 | 8 | 8 | 8 | 8 |
| Vulcanization accelerator (CBS) *8 | 1.7 | 1.7 | 1.7 | 1.7 | 1.7 |
| Vulcanization accelerator (DPG) *9 | 2 | 2 | 2 | 2 | 2 |
| Sulfur | 1.4 | 1.4 | 1.4 | 1.4 | 1.4 |

*1: SBR (styrene/butadiene rubber) [bonded styrene=23.5%, $ML_{1+4}$ (100°C)=49, aromatic oil 37.5 phr oil-extended product]: Nipol 1712 (ZEON Corporation)
*2: BR (butadiene rubber) [$ML_{1+4}$ (100°C)=23]: Nipol 1220 (ZEON Corporation)
*3: Zinc white: two types of zinc oxides (Hakusui Tech Co., Ltd.)
*4: Aromatic process oil: DIANA PROCESS OIL AH-24, manufactured by Idemitsu Kosan Co. Ltd.]
*5: Wet silica: NIPSIL VN3 (Nippon Silica Co., Ltd.)
*6: ISAF carbon black: ASAHI #80 (Asahi Carbon Co., Ltd.)
*7: Coupling agent MB: SILANOGRAN Si-69/GR (Seika Sangyo Co., Ltd.)
*8: Vulcanization accelerator (CBS): SANCELER CM (Sanshin Chemical Industry Co., Ltd.)
*9: Vulcanization accelerator (DPG): SANCELER D-G (Sanshin Chemical Industry Co., Ltd.)

[Table 21]

| Physical properties of Component (C8) | | | | | |
|---|---|---|---|---|---|
| | | | Modified polyolefin-1 | Modified polyolefin-2 | Modified polyolefin-3 |
| <Physical properties before modification> | | | | | |
| Polyolefin composition | | Molar ratio | Ethylene/ propylene = 80/20 | Ethylene/butene = 80/20 | Ethylene/butene = 85/15 |
| MFR (230°C) | ASTM D 1238 | g/ 10 min | 0.7 | 1.0 | 1.0 |
| Density | ASTM D 1505 | kg/m$^3$ | 870 | 860 | 870 |
| <Physical properties after modification> | | | | | |
| MFR (230°C) | ASTM D 1238 | g/ 10 min | 0.2 | 1.2 | 1.4 |
| Maleic acid content | | % | 1 | 1 | 1 |

[Table 22]

| Blend of Component (C8) <Physical properties> | | | | | |
|---|---|---|---|---|---|
| | Comp. Ex. 1 | Comp. Ex. 2 | Ex. 21 | Ex. 22 | Ex. 23 |
| <Physical properties in ordinary state> | | | | | |
| $H_A$ | 62 | 64 | 62 | 62 | 62 |

(continued)

| Blend of Component (C8) <Physical properties> | | | | | |
|---|---|---|---|---|---|
| | Comp. Ex. 1 | Comp. Ex. 2 | Ex. 21 | Ex. 22 | Ex. 23 |
| <Physical properties in ordinary state> | | | | | |
| $M_{100}$[MPa] | 1.86 | 1.93 | 1.97 | 2.08 | 1.98 |
| $M_{200}$[MPa] | 5.22 | 5.23 | 5.19 | 5.63 | 5.11 |
| $M_{300}$[MPa] | 9.89 | 9.73 | 9.40 | 10.18 | 9.20 |
| $T_B$[MPa] | 18.2 | 16.8 | 17.3 | 17.0 | 17.0 |
| $E_B$[%] | 470 | 450 | 480 | 460 | 480 |
| Tensile product ($T_B \times E_B$) | 8554 | 7547 | 8304 | 7820 | 8160 |
| <Fatigue resistance> | | | | | |
| Number of breaking [times] | 14410 | 12940 | 15160 | 14490 | 14670 |
| Stress at break [N] | 8.4 | 5.5 | 8.3 | 8.4 | 8.0 |
| <Dynamic ozone resistance> | | | | | |
| Generation of crack | C-5/C-5 | B-2/B-2 | B-2/B-2 | B-2/B-2 | B-2/B-2 |
| <Viscoelasticity> | | | | | |
| tan δ (-10°C) | 0.318 | 0.465 | 0.431 | 0.425 | 0.433 |
| tan δ (60°C) | 0.181 | 0.165 | 0.166 | 0.168 | 0.166 |
| <Abrasion resistance> | 100 | 85 | 101 | 100 | 101 |

[Comparative Examples 1 and 2 and Examples 24 to 31]

Examples 24 to 31 where the component (C9) was compounded, exhibited improved $T_B$, $E_B$ and fatigue resistance as compared to Comparative Example 2, and thus all the performances required for the tire could be improved with good balance (see Tables 23 to 25).

[Table 23]

| Blend of Component (C9) <Blending> | | | | | | | | | | |
|---|---|---|---|---|---|---|---|---|---|---|
| | Comp.Ex. 1 | Comp.Ex. 2 | Ex. 24 | Ex. 25 | Ex. 26 | Ex. 27 | Ex. 28 | Ex. 29 | Ex. 30 | Ex. 31 |
| <Formulation> [Parts by weight] | | | | | | | | | | |
| Component (A) | | | | | | | | | | |
| Copolymer 1 (EPT) | | 20 | 20 | 20 | 20 | 20 | 20 | 20 | 20 | 20 |
| Component (B) | | | | | | | | | | |
| SBR *1 | 103.125 | 82.5 | 82.5 | 82.5 | 82.5 | 82.5 | 82.5 | 82.5 | 82.5 | 82.5 |
| BR *2 | 25 | 20 | 20 | 20 | 20 | 20 | 20 | 20 | 20 | 20 |
| Component (C9) | | | | | | | | | | |
| Sorbitan fatty acid ester | | | 5 | | | | | | | |
| Polyoxyethylene alkyl ether | | | | 5 | | | | | | |
| Polyoxyethylene fatty acid ester-1 | | | | | 5 | | | | | |
| Polyoxyethylene fatty acid ester-2 | | | | | | 5 | | | | |

(continued)

| | | | | | | | | | | |
|---|---|---|---|---|---|---|---|---|---|---|
| Component (C9) | | | | | | | | | | |
| Polyoxyethylene fatty acid ester-3 | | | | | | | 5 | | | |
| Polyoxyethylene hydrogenated castor oil-1 | | | | | | | | 5 | | |
| Polyoxyethylene hydrogenated castor oil-2 | | | | | | | | | 5 | |
| Alkyl betaine | | | | | | | | | | 5 |
| Zinc white *3 | 3 | 3 | 3 | 3 | 3 | 3 | 3 | 3 | 3 | 3 |
| Stearic acid | 1 | 1 | 1 | 1 | 1 | 1 | 1 | 1 | 1 | 1 |
| Aromatic process oil *4 | 16.875 | 27.5 | 27.5 | 27.5 | 27.5 | 27.5 | 27.5 | 27.5 | 27.5 | 27.5 |
| Wet silica *5 | 36 | 36 | 36 | 36 | 36 | 36 | 36 | 36 | 36 | 36 |
| ISAF Carbon black *6 | 40 | 40 | 40 | 40 | 40 | 40 | 40 | 40 | 40 | 40 |
| Coupling agent MB *7 | 8 | 8 | 8 | 8 | 8 | 8 | 8 | 8 | 8 | 8 |
| Vulcanization accelerator (CBS) *8 | 1.7 | 1.7 | 1.7 | 1.7 | 1.7 | 1.7 | 1.7 | 1.7 | 1.7 | 1.7 |
| Vulcanization accelerator (DPG) *9 | 2 | 2 | 2 | 2 | 2 | 2 | 2 | 2 | 2 | 2 |
| Sulfur | 1.4 | 1.4 | 1.4 | 1.4 | 1.4 | 1.4 | 1.4 | 1.4 | 1.4 | 1.4 |

*1: SBR (styrene/butadiene rubber) [bonded styrene=23.5%, $ML_{1+4}$ (100°C)=49, aromatic oil 37.5 phr oil-extended product]: Nipol 1712 (ZEON Corporation)
*2: BR (butadiene rubber) [$ML_{1+4}$ (100°C)=23]: Nipol 1220 (ZEON Corporation)
*3: Zinc white: two types of zinc oxides (Hakusui Tech Co., Ltd.)
*4: Aromatic process oil: DIANA PROCESS OIL AH-24, manufactured by Idemitsu Kosan Co. Ltd.]
*5: Wet silica: NIPSIL VN3 (Nippon Silica Co., Ltd.)
*6: ISAF carbon black: ASAHI #80 (Asahi Carbon Co., Ltd.)
*7: Coupling agent MB: SILANOGRAN Si-69/GR (Seika Sangyo Co., Ltd.)
*8: Vulcanization accelerator (CBS): SANCELER CM (Sanshin Chemical Industry Co., Ltd.)
*9: Vulcanization accelerator (DPG): SANCELER D-G (Sanshin Chemical Industry Co., Ltd.)

[Table 24]

| Physical properties of Component (C9) | | | |
|---|---|---|---|
| | Composition | Product name (manufactured by Kao Corp.) | HLB |
| <Nonionic surfactant><br>Sorbitan fatty acid ester | Sorbitan trioleate | REODOL SP-030V | 1.8 |
| Polyoxyethylene alkyl ether | Polyoxyethylene stearyl ether | EMAGEN 306P | 9.4 |
| Polyoxyethylene fatty acid ester-1 | Polyoxyethylene glycol monolaurate | EMANON 1112 | 13.7 |
| Polyoxyethylene fatty acid ester-2 | Polyoxyethylene glycol monostearate | EMANON 3199 | 19.4 |

(continued)

| Physical properties of Component (C9) | | | |
|---|---|---|---|
| | Composition | Product name (manufactured by Kao Corp.) | HLB |
| <Nonionic surfactant><br>Polyoxyethylene fatty acid ester-3 | Polyoxyethylene glycol distearate | EMANON 3299 | 18.9 |
| Polyoxyethylene hydrogenated castor oil-1 | Polyoxyethylene hydrogenated castor oil | EMANON CH-25 | 10.7 |
| Polyoxyethylene hydrogenated castor oil-2 | Polyoxyethylene hydrogenated castor oil | EMANON CH-60 | 14.0 |
| <Amphoteric surfactant><br>Alkyl betaine | Lauryl betaine | AMPHITOL 20BS | - |

[Table 25]

| Blend of Component (C9) <Physical properties> | | | | | | | | | | |
|---|---|---|---|---|---|---|---|---|---|---|
| | Comp. Ex. 1 | Comp. Ex. 2 | Ex. 24 | Ex. 25 | Ex. 26 | Ex. 27 | Ex. 28 | Ex. 29 | Ex. 30 | Ex. 31 |
| <Physical properties in ordinary state> | | | | | | | | | | |
| $H_A$ | 62 | 64 | 62 | 60 | 60 | 63 | 61 | 62 | 61 | 63 |
| $M_{100}$[MPa] | 1.86 | 1.93 | 1.85 | 1.77 | 1.86 | 1.97 | 1.82 | 1.84 | 1.82 | 1.95 |
| $M_{200}$[MPa] | 5.22 | 5.23 | 5.06 | 4.66 | 4.96 | 5.49 | 4.90 | 4.97 | 4.80 | 5.13 |
| $M_{300}$[MPa] | 9.89 | 9.73 | 9.40 | 8.60 | 9.21 | 10.07 | 9.02 | 9.23 | 8.86 | 9.52 |
| $T_B$[MPa] | 18.2 | 16.8 | 16.9 | 17.0 | 17.4 | 17.4 | 17.2 | 18.0 | 16.8 | 18.0 |
| $E_B$[%] | 470 | 450 | 470 | 460 | 480 | 470 | 490 | 500 | 480 | 490 |
| Tensile product ($T_B \times E_B$) | 8554 | 7547 | 7943 | 7820 | 8352 | 8178 | 8428 | 9000 | 8064 | 8820 |
| <Fatigue resistance> | | | | | | | | | | |
| Number of breaking [times] | 14410 | 12940 | 16340 | 13860 | 18370 | 15600 | 18630 | 17760 | 16620 | 14790 |
| Stress at break [N] | 8.4 | 5.5 | 5.2 | 5.4 | 6.9 | 7.9 | 7.2 | 5.1 | 7.2 | 5.9 |
| <Dynamic ozone resistance> | | | | | | | | | | |
| Generation of crack | C-5/C-5 | B-2/B-2 | B-2/B-2 | B-2/B-2 | B-2/B-2 | B-2/B-2 | B-2/B-2 | B-2/B-2 | B-2/B-2 | B-2/B-2 |
| <Viscoelasticity> | | | | | | | | | | |
| tan δ (-10°C) | 0.318 | 0.465 | 0.455 | 0.458 | 0.451 | 0.450 | 0.460 | 0.457 | 0.451 | 0.452 |
| tan δ (60°C) | 0.181 | 0.165 | 0.165 | 0.167 | 0.168 | 0.167 | 0.165 | 0.166 | 0.168 | 0.166 |
| <Abrasion resistance> | 100 | 85 | 100 | 101 | 103 | 102 | 101 | 102 | 101 | 102 |

INDUSTRIAL APPLICABILITY

The present invention relates to a new and useful rubber composition comprising a nonconjugated polyene copolymer, a diene rubber and specific compounds. The rubber composition according to the present invention may be widely used as raw materials of rubber articles, and can be suitably used as the rubber material for tires. Specific examples of the rubber material for tires include materials for tire tread and for tire side wall. Above all, the rubber composition according to the present invention can be most preferably used for the material (raw material) for tire tread, whereby a tire excellent in both of braking performance and fuel consumption performance, and weather resistance, ozone resistance, and particularly mechanical property and fatigue resistance can be obtained.

## Claims

**1.** A rubber composition comprising:

(A) 60 to 0.1 parts by weight of a nonconjugated polyene copolymer, which is a random copolymer containing 96 to 70 mol% of the structural units derived from α-olefin (A1) and 4 to 30 mol% of the structural units derived from a nonconjugated polyene (A2), and has a glass transition temperature (Tg) of -25 to 20°C,
(B) 40 to 99.9 parts by weight of a diene rubber and
(C) a below-described amount, based on 100 parts by weight of the total amount of the component (A) and the component (B), of at least one selected from the group consisting of the following components (C1) to (C9), with the proviso that if the component (C) comprises an acrylonitrile-conjugated diene copolymer (C4), the component (B) is not the acrylonitrile-conjugated diene copolymer:

(C1) 1 to 15 parts by weight of a copolymer of α-olefin having 2 or more carbon atoms and a vinyl compound having a polar group,
(C2) 1 to 15 parts by weight of a copolymer containing a block segment of aromatic vinyl polymer and a block segment of conjugated diene polymer, or a hydrogen adduct thereof,
(C3) 1 to 15 parts by weight of an α-olefin polymer or an α-olefin copolymer, which is obtained by (co) polymerizing of one or two or more kinds of α-olefins having the total number of 6 or more carbon atoms, with the proviso that in the case of the copolymer in which the α-olefins contain two or more kinds of α-olefins and contain an α-olefin having 5 or less carbon atoms, the structural units derived from at least one kind of α-olefin is preset in the range of 5 to 95 mol%,
(C4) 1 to 15 parts by weight of an acrylonitrile-conjugated diene copolymer,
(C5) 1 to 15 parts by weight of olefinic thermoplastic elastomer, which is obtained by dynamically heat-treating 5 to 60% by weight of polyethylene resin (C5-1) and 95 to 40% by weight of an ethylene/α-olefin copolymer (C5-2) with a Mooney viscosity [$ML_{1+4}$ (100°C), JIS K6300] of 90 to 250, and an ethylene content of 70 to 95 mol%, in the absence of a crosslinking agent,
(C6) 1 to 15 parts by weight of an α-olefin/nonconjugated diene copolymer, which is obtained by copolymerizing one or two or more kinds of α-olefins and the nonconjugated diene represented by the following formula [I] or [II], contains 0.1 to 30 mol% of the nonconjugated polyene, based on 100 mol% of the total amount of the α-olefins and the nonconjugated polyene, and has a glass transition temperature (Tg) of lower than -25°C:

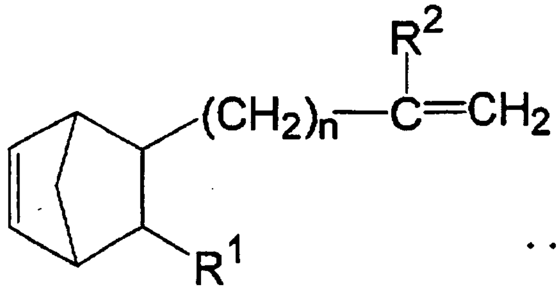

··· [I]

wherein n is an integer of 0 to 10,
$R^1$ is a hydrogen atom or an alkyl group having 1 to 10 carbon atoms, and
$R^2$ is a hydrogen atom or an alkyl group having 1 to 5 carbon atoms,

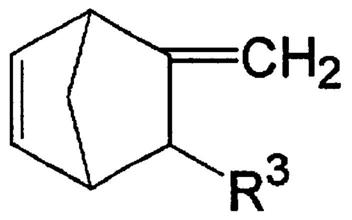

··· [II]

wherein $R^3$ is a hydrogen atom or an alkyl group having 1 to 10 carbon atoms.
(C7) 1 to 15 parts by weight of an α-olefin/nonconjugated diene copolymer, which is obtained by copolymerizing one or two or more kinds of α-olefins having 2 or more carbon atoms and the nonconjugated polyene represented by the following formula (2-1), contains 0.1 to 30 mol% of the nonconjugated polyene, based on 100 mol% of the total amount of the α-olefins and the nonconjugated polyene, and has a glass transition temperature (Tg) of lower than -25°C,

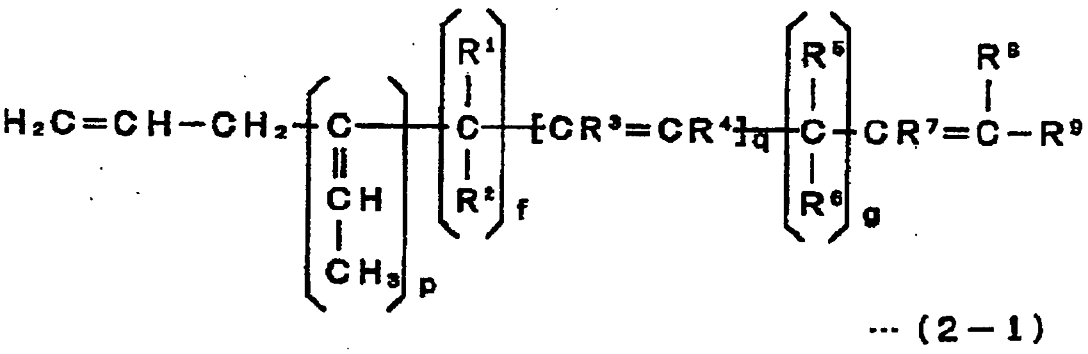

··· (2-1) ;

wherein p and q are 0 or 1 with the proviso that p and q are not simultaneously 0;
f is an integer of 0 to 5 with the proviso that f is not 0 when both p and q are 1;
g is an integer of 1 to 6;
$R^1$, $R^2$, $R^3$, $R^4$, $R^5$, $R^6$ and $R^7$ are each independently a hydrogen atom or an alkyl group having 1 to 3 carbon atoms;
$R^8$ is an alkyl group having 1 to 3 carbon atoms; and
$R^9$ is a hydrogen atom, an alkyl group having 1 to 3 carbon atoms or a group represented by $-(CH_2)_n-CR^{10}=C(R^{11})R^{12}$ wherein n is an integer of 1 to 5, $R^{10}$ and $R^{11}$ are each independently a hydrogen atom or an alkyl group having 1 to 3 carbon atoms and $R^{12}$ is an alkyl group having 1 to 3 carbon atoms, with the proviso that $R^9$ is a hydrogen atom or an alkyl group having 1 to 3 carbon atoms when both p and q are 1,
(C8) 1 to 15 parts by weight of a modified polymer, which is obtained by graft-modifying any one of the above polymers (C1), (C2), (C3), (C6), (C7) by an unsaturated compound having a polar group, and
(C9) 1 to 15 parts by weight of a nonionic surfactant, a cationic surfactant, an anionic surfactant or an amphoteric surfactant, or a mixture of two or more thereof, which has a hydrophilic group and an oleophilic group.

2. The rubber composition according to claim 1, which further comprises 1 to 30 parts by weight a petroleum resin (D), based on 100 parts by weight of the total amount of the nonconjugated polyene component (A) and the diene rubber (B).

3. The rubber composition according to claim 1, wherein the structural units derived from the α-olefin (A1) comprises

structural units (a) derived from ethylene, and a molar ratio [(a)/(b)] of the structural units (a) derived from ethylene and the structural units (b) derived from the α-olefin having 3 or more carbon atoms is 100/0 to 1/99.

**4.** The rubber composition according to any one of claims 1 to 3, wherein the nonconjugated polyene copolymer (A) has a Mooney viscosity [$ML_{1+4}$ (100°C), JIS K6300] of 5 to 200.

**5.** The rubber composition according to any one of claims 1 to 4, wherein the nonconjugated polyene copolymer (A) has an intrinsic viscosity [η], as measured in decalin at 135°C, of 0.01 to 10 dl/g.

**6.** The rubber composition according to any one of claims 1 to 5, wherein at least a portion of the nonconjugated polyene (A2) is a nonconjugated cyclic polyene (A2a).

**7.** The rubber composition according to claim 6, wherein the nonconjugated cyclic polyene (A2a) is a nonconjugated cyclic polyene represented by the following formula (1-1):

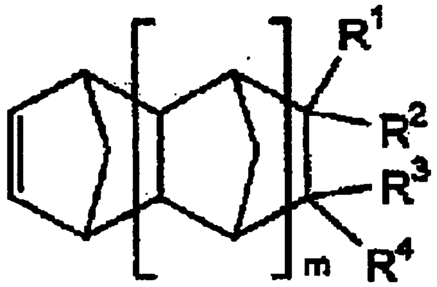

··· (1-1)

wherein m is an integer of 0 to 2,
$R^1$ to $R^4$ are each independently an atom or group selected from the group consisting of a hydrogen atom, a halogen atom and a hydrocarbon group, and the hydrocarbon group may have a double bond;
$R^1$ to $R^4$ may be linked with one another to form a monocyclic or polycyclic ring which may have a double bond;
$R^1$ and $R^2$, or $R^3$ and $R^4$ may together form an alkylidene group; and
$R^1$ and $R^3$, or $R^2$ and $R^4$ may be linked to each other to form a double bond, with the proviso that $R^1$ to $R^4$ satisfy at least one of the following (i) to (iv) conditions:

(i) $R^1$ to $R^4$ are linked with one another to form a monocyclic or polycyclic ring having a double bond;
(ii) $R^1$ and $R^2$, or $R^3$ and $R^4$ together form an alkylidene group;
(iii) $R^1$ and $R^3$, or $R^2$ and $R^4$ are linked to each other to form a double bond; and
(iv) at least one of $R^1$ to $R^4$ represents an unsaturated hydrocarbon group having at least one double bond.

**8.** A rubber material for a tire, comprising the rubber composition according to any one of claims 1 to 7.

**9.** A tire tread formed using the rubber material for a tire according to claim 8.

**10.** A tire provided with the tire tread according to claim 9.

**INTERNATIONAL SEARCH REPORT**

International application No.
PCT/JP2005/008244

A. CLASSIFICATION OF SUBJECT MATTER
Int.Cl⁷ C08L23/08, B60C1/00, C08L9/00

According to International Patent Classification (IPC) or to both national classification and IPC

B. FIELDS SEARCHED

Minimum documentation searched (classification system followed by classification symbols)
Int.Cl⁷ C08L1/00-101/16, B60C1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-114837 A (Mitsui Chemicals, Inc.), 24 April, 2001 (24.04.01), Full description | 1-10 |
| A | JP 11-278009 A (Bridgestone Corp.), 12 October, 1999 (12.10.99), Full description | 1-10 |
| A | JP 9-77931 A (Mitsui Petrochemical Industries, Ltd.), 25 March, 1997 (25.03.97), Full description (Family: none) | 1-10 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 June, 2005 (09.06.05) | 28 June, 2005 (28.06.05) |
| Name and mailing address of the ISA/ Japanese Patent Office | Authorized officer |
| Facsimile No. | Telephone No. |

Form PCT/ISA/210 (second sheet) (January 2004)

INTERNATIONAL SEARCH REPORT

International application No.
PCT/JP2005/008244

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-38473 A (JSR Corp.), 08 February, 2000 (08.02.00), Full description (Family: none) | 1-10 |
| A | JP 2001-123026 A (Mitsui Chemicals, Inc.), 08 May, 2001 (08.05.01), Full description (Family: none) | 1-10 |
| A | JP 8-311263 A (Mitsui Petrochemical Industries, Ltd.), 26 November, 1996 (26.11.96), Full description | 1-10 |
| A | JP 2004-10863 A (The Yokohama Rubber Co., Ltd., Mitsui Chemicals, Inc.), 15 January, 2004 (15.01.04), Full description (Family: none) | 1-10 |
| A | JP 2001-2733 A (Mitsui Chemicals, Inc.), 09 January, 2001 (09.01.01), Full description (Family: none) | 1-10 |

Form PCT/ISA/210 (continuation of second sheet) (January 2004)

**INTERNATIONAL SEARCH REPORT**
Information on patent family members

International application No.
PCT/JP2005/008244

| | | | |
|---|---|---|---|
| JP 2001-114837 A | 2001.04.24 | US 006787623 B | 2004.09.07 |
| | | EP 001217015 A1 | 2002.06.26 |
| | | WO 01/012686 A1 | 2001.02.22 |
| JP 11-278009 A | 1999.10.12 | US 006602954 B1 | 2003.08.08 |
| | | EP 001008464 A1 | 2000.06.14 |
| | | AU 000757562 B | 2003.02.27 |
| | | CA 002257002 A | 1999.06.30 |
| JP 08-311263 A | 1996.11.26 | US 005912303 A1 | 1999.06.15 |
| | | EP 000744440 A1 | 1996.11.27 |
| | | CN 001148608 A | 1997.04.30 |
| | | CN 002177239 A | 1996.11.25 |
| | | CN 001314432 A | 2001.09.26 |

Form PCT/ISA/210 (patent family annex) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001114837 A
- JP 11278009 A
- JP 9040586 A
- WO 0055251 A
- JP 8325334 A
- JP 2000297121 A
- JP 9302038 A


### Non-patent literature cited in the description


- 14303 Chemical Product. The Chemical Daily Co., Ltd, 28 January 2003, 1209-1210
- Polymer Preparation Process. Kogyo Chosakai Publishing Co., Ltd, 309-330
- **GRIFFIN.** *J. soc. Cosmetic Chemists,* 1949, vol. 1, 311